# EUROPEAN PATENT SPECIFICATION

(11) **EP 3 693 426 B1**
(45) Date of publication and mention of the grant of the patent: **29.12.2021**
(21) Application number: 18864643.4
(22) Date of filing: 27.09.2018
(51) Int. Cl.: C09D 201/00, C09D 5/16, C09D 7/63, C09D 133/00, C09D 201/10, C08K 5/10, C08K 5/103, C08K 5/11, C09D 133/06, C09D 143/04

(54) **ANTIFOULING PAINT COMPOSITION AND COATED ARTICLE HAVING ANTIFOULING COATING FORMED USING SAID COMPOSITION ON SURFACE**
BEWUCHSHEMMENDE LACKZUSAMMENSETZUNG UND BESCHICHTETER ARTIKEL MIT EINER UNTER VERWENDUNG DER BESAGTEN ZUSAMMENSETZUNG GEBILDETEN BEWUCHSHEMMENDEN BESCHICHTUNG AUF DER OBERFLÄCHE
COMPOSITION DE REVÊTEMENT ANTISALISSURE, ET OBJET REVÊTU AYANT À SA SURFACE UN FILM DE REVÊTEMENT ANTISALISSURE FORMÉ AU MOYEN DE CETTE COMPOSITION

(30) Priority: 04.10.2017 JP 2017194706
(43) Date of publication of application: 12.08.2020
(73) Proprietor: Nitto Kasei Co., Ltd., Osaka-shi Osaka 533-0031 (JP)
(72) Inventor: WAKU, Hidenori, Osaka-shi Osaka 533-0031 (JP); OKA, Nagato, Osaka-shi Osaka 533-0031 (JP)
(74) Representative: Gulde & Partner
(86) International application number: PCT/JP2018/035887
(87) International publication number: WO 2019/069777

(56) References cited:
- EP-A1- 0 562 730
- EP-A1- 1 466 949
- EP-A1- 3 211 014
- JP-A- H10 259 326
- JP-A- 2001 226 440
- BROWN, Robert et al.: "Reproducible Superhydrophobic PVC Coatings; Investigating the Use of Plasticizers for Early Stage Biofouling Control", Advanced Engineering Materials, vol. 19, no. 17, 7 April 2017 (2017-04-07) , page 1700053, XP055589318, ISSN: 1438-1656, DOI: 10.1002/adem.201700053

## Description

### TECHNICAL FIELD

The present invention relates to the use of an antifouling coating composition for forming an antifouling coating film, and to a coated object having on its surface an antifouling coating film formed using the composition.

### BACKGROUND

Aquatic fouling organisms such as barnacles, tubeworms, common mussels, *Bugula neritina,* sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long period of time has been known (JP 2000-17203 A).

EP 0 562 730 A1, EP 0 866 103 A1, EP 1 466 949 A1, JP 2001 226440 A, and EP 3 211 014 A1 disclose antifouling compositions containing ester compounds.

### SUMMARY OF INVENTION

### TECHNICAL PROBLEM

However, even when the technique of Patent Literature 1 is used, there are cases where the initial film dissolution becomes too large, and film defects such as cracks occur after a relatively short period of time. Accordingly, further improvement is required.

The present invention has been made by taking the afore-mentioned circumstances into consideration. The present invention provides an antifouling coating composition which can maintain stable film dissolution speed for a long period of time in seawater, and can maintain stable antifouling performance without occurrence of film defects such as cracks in the coating film.

### SOLUTION TO PROBLEM

According to the present invention, an antifouling coating composition, comprising: a resin component (A) ; and an ester compound (B) ; wherein the ester compound (B) comprises at least one ester compound represented by chemical formulas (1) to (5); is provided.

The present inventors have conducted intensive studies, and have found that when the antifouling coating composition is allowed to include a resin component (A) and an ester compound (B) having a particular structure as defined in claim 1, an unpredictable effect in which the initial film dissolution defect (excessive dissolution) and film dissolution defect in the later stage (termination of film dissolution and the like) are improved and the intrinsic film dissolution speed of the resin component (A) is maintained stably for a long period of time, without impairing the film property (particularly the anti-cracking property) can be achieved, thereby completing the present invention.

### EFFECT OF THE INVENTION

According to the present invention, use of an antifouling coating composition which can form an antifouling coating film capable of maintaining high antifouling performance for a long period of time stably, is provided. In addition, since the antifouling coating composition in the present invention allows the coating film formed to have a stable dissolution speed for a long period of time, the film thickness can be designed more precisely, thereby allowing adjustment of the amount of coating to achieve the necessary antifouling performance (time period) without shortage or excess.

### MODE FOR CARRYING OUT THE INVENTION

In a first aspect the present invention is directed to the use of an antifouling coating composition for forming an antifouling coating film to prevent adhesion of aquatic fouling organisms, comprising:
a resin component (A);
an ester compound (B), wherein the ester compound (B) is contained by 0.1 to 15 mass% in the solids of the composition; and
an antifouling agent,
wherein
the ester compound (B) comprises at least one ester compound represented by the following chemical formula (14), chemical formula (15), chemical formula (16) or chemical formula (19): 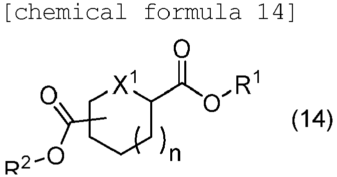
wherein, X¹ is a C0-C6 group which can include a hetero atom, wherein when the number of carbon atoms in X¹ is 0, X¹ is a hetero atom-containing group containing no carbon atom, and represents O, S, NH;
each of R¹ and R² is a C1-C22 hydrocarbon group which can include a hetero atom, and the hydrocarbon group is aliphatic or aromatic, and has a linear, branched, or cyclic structure;
n is an integer of 0 to 5; and
the substituent group having R² is bonded to either one of the atoms structuring the cyclic structure; 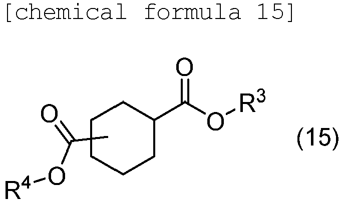
wherein, each of R³ and R⁴ is a C1-C22 hydrocarbon group which can include a hetero atom, and the hydrocarbon group is aliphatic or aromatic, and has a linear, branched, or cyclic structure; and
the substituent group having R⁴ is bonded to either one of the atoms structuring the cyclic structure; 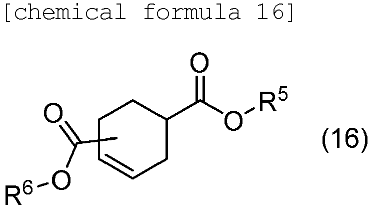
wherein, each of R⁵ and R⁶ is a C1-C22 hydrocarbon group which can include a hetero atom, and the hydrocarbon group is aliphatic or aromatic, and has a linear, branched, or cyclic structure; and
the substituent group having R⁶ is bonded to either one of the atoms structuring the cyclic structure; 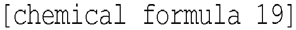 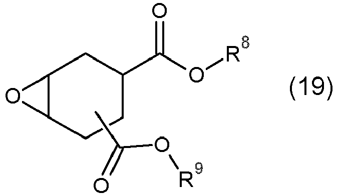
wherein, each of R⁸ and R⁹ is a C1-C22 hydrocarbon group which can include a hetero atom, and the hydrocarbon group is aliphatic or aromatic, and has a linear, branched, or cyclic structure; and
the substituent group having R⁹ is bonded to either one of the atoms structuring the cyclic structure; and wherein
the resin compound (A) being a polymer obtained from a monomer comprising one or more among monomer (a), monomer (b), monomer (c), and monomer (d):
   (a) chemical formula (9): 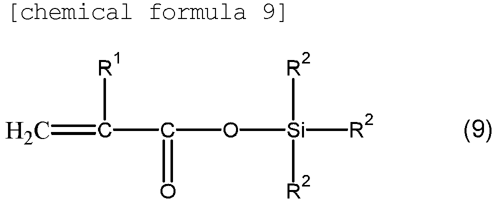 wherein, R¹ represents a hydrogen atom or a methyl group; three R² are the same or different from each other and represent a C3-C8 hydrocarbon group branched at its α-position or at its β-position; and the hydrocarbon group is an aliphatic or an aromatic group, and has a linear, branched, or ring structure;
   (b) chemical formula (10): 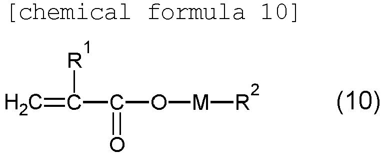 wherein, R¹ represents a group selected from a hydrogen atom and a methyl group, M represents a metal atom of Zn, Cu, or Mg, and R² represents an organic acid residue group;
   (c) chemical formula (11): 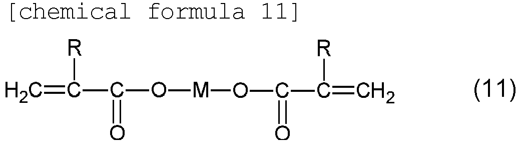 wherein, two R are the same or different from each other and represent a group selected from a hydrogen atom and a methyl group, M represents a metal atom of Zn, Cu, or Mg; and
   (d) an ethylenically unsaturated monomer other than monomer (a), monomer (b), and monomer (c).

In a second aspect the present invention is directed to a coated object having on its surface an antifouling coating film formed by using the antifouling coating composition as defined in the firt aspect of the present invention.

Hereinafter, the present invention will be described in more detail.

### 1. antifouling coating composition

In the present invention the antifouling coating composition includes a resin component (A), an ester compound (B) and an antifouling agent.

### 1-1. resin component (A)

As the resin component (A), acrylic resin, polyester resin, urethane resin and the like can be mentioned. Acrylic resin is especially preferable.

In the present invention the resin component (A) is obtained by polymerizing a monomer including one or more among monomer (a), monomer (b), monomer (c), and monomer (d). The monomer for polymerizing the resin can include only one monomer among the monomers (a) to (d), or can include two, three, or four monomers among the monomers (a) to (d). As the compound included as the monomers (a) to (d), each of them can be a single compound, or can be two or more compounds.

### <monomer (a)>

The monomer (a) has a structure represented by chemical formula (9). 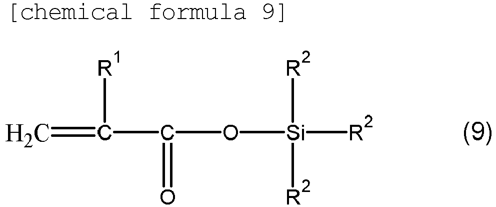 (Wherein, R¹ represents a hydrogen atom or a methyl group; three R² are the same or different from each other and represent a C3-C8 hydrocarbon group branched at its α-position or at its β-position; and the hydrocarbon group is an aliphatic or an aromatic group, and has a linear, branched, or ring structure.)

As the C3-C8 hydrocarbon group branched at its α-position, for example, isopropyl group, s-butyl group, t-butyl group, 1-ethylpropyl group, 1-methylbutyl group, 1-methylpentyl group, 1,1-dimethylpropyl group, 1,1-dimethylbutyl group, texyl group, cyclohexyl group, 1,1-dimethylpentyl group, 1-methylhexyl group, 1,1-dimethylhexyl group, 1-methylheptyl group and the like can be mentioned. As the hydrocarbon group branched at its β-position, for example, 2,2-dimethylpropyl group, cyclohexylmethyl group, 2-ethylhexyl group, 2-propylpentyl group and the like can be mentioned.

By selecting a particular group as R², occurrence of film defects can be further suppressed, and the water resistance of the antifouling coating film is especially improved. From such viewpoints, R² are the same or different from each other and are each preferably isopropyl group, s-butyl group, t-butyl group, phenyl group, and 2-ethylhexyl group; and more preferably isopropyl group.

As the monomer (a), for example, triisopropylsilyl (meth)acrylate, tri-s-butylsilyl (meth)acrylate, triphenylsilyl (meth)acrylate, diisopropyl s-butylsilyl (meth)acrylate, diisopropyl t-butylsilyl (meth)acrylate, diisopropyltexylsilyl (meth)acrylate, diisopropylphenylsilyl (meth)acrylate, isopropyl di-s-butylsilyl (meth)acrylate, isopropyldiphenylsilyl (meth)acrylate, diphenyltexylsilyl (meth)acrylate, t-butyldiphenylsilyl (meth)acrylate, diisopropylcyclohexylsilane (meth)acrylate, tricyclohexylsilane (meth)acrylate, tri-1,1-dimethylpentylsilane (meth)acrylate, tri-1-methylhexylsilane (meth)acrylate, tri-1,1-dimethylhexylsilane (meth)acrylate, tri-1-methylheptylsilane (meth)acrylate, tri-2,2-dimethylpropylsilane (meth)acrylate, tricyclohexylmethylsilane (meth)acrylate, diisopropylcyclohexylmethylsilane (meth)acrylate, tri-2-ethylhexylsilane (meth)acrylate, tri-2-propylpentylsilane (meth) acrylate and the like can be mentioned. In view of the ability to form an antifouling coating film which hardly occur film defect and is superior in water resistance, triisopropylsilyl (meth)acrylate, tri-s-butylsilyl (meth)acrylate, t-butyldiphenylsilyl (meth)acrylate, and tri-2-ethylhexylsilyl (meth)acrylate are preferable, and triisopropylsilyl (meth)acrylate is further preferable. These monomers can be used alone or two or more of these can be used in combination.

### <monomer (b)>

Monomer (b) has a structure represented by chemical formula (10) . 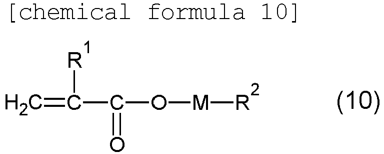 (Wherein, R¹ represents a group selected from a hydrogen atom and a methyl group, M represents a metal atom of Zn, Cu, or Mg, and R² represents an organic acid residue group.)

Number of carbon atoms included in the organic acid residue group is 6 to 20 for example, preferably 7 to 15, and further preferably 7 to 12. As the organic acid, for example, versatic acid, octylic acid, lauric acid, stearic acid, naphthenic acid, hydrogenated rosin and the like can be mentioned. From the viewpoint of availability or raw material and film property, versatic acid, naphthenic acid, and hydrogenated rosin are preferable. As the monomer (b), for example, zinc versatate (meth)acrylate, magnesium versatate (meth)acrylate, copper versatate (meth)acrylate, zinc octylate (meth)acrylate, magnesium octylate (meth)acrylate, copper octylate (meth)acrylate, zinc laurate (meth)acrylate, magnesium laurate (meth)acrylate, copper laurate (meth)acrylate, zinc stearate (meth)acrylate, magnesium stearate (meth)acrylate, copper stearate (meth)acrylate, zinc naphthenate (meth)acrylate, magnesium naphthenate (meth)acrylate, copper naphthenate (meth)acrylate, hydrogenated rosin zinc (meth)acrylate, hydrogenated rosin copper (meth)acrylate, and the like can be mentioned.

### <monomer (c)>

Monomer (c) has a structure represented by chemical formula (11) . 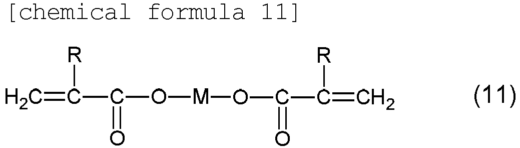 (Wherein, two R are the same or different from each other and represent a group selected from a hydrogen atom and a methyl group, M represents a metal atom of Zn, Cu, or Mg.)

As the monomer (c), for example, zinc (meth)acrylate, magnesium (meth)acrylate, copper (meth)acrylate, and calcium (meth)acrylate can be mentioned. From the viewpoint of manufacturing process, manufacturing cost, raw material availability, environmental safety, and film property, zinc (meth)acrylate and copper (meth)acrylate are preferable. These can be used alone, or two or more of these can be used in combination.

### <monomer (d)>

Monomer (d) is an ethylenically unsaturated monomer other than monomer (a), monomer (b), and monomer (c). Monomer (d) is preferably capable to undergo polymerization with one or more of monomer (a), monomer (b), and monomer (c). As the monomer (d), for example, (meth)acrylates such as methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, 2-methoxyethyl acrylate, 2-methoxypropyl acrylate, 4-methoxybutyl acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, benzyl (meth)acrylate, and phenyl (meth)acrylate; vinyl compounds such as vinyl chloride, vinylidene chloride, (meth)acrylonitrile, vinyl acetate, butyl vinyl ether, lauryl vinyl ether, and N-vinylpyrrolidone; and aromatic compounds such as styrene, vinyl toluene, and α-methyl styrene can be mentioned. As the monomer (d), (meth)acrylic acid ester or styrene are preferable. From the viewpoint of the availability of the raw material and film property, methyl (meth)acrylate, ethyl (meth)acrylate, n-butyl (meth)acrylate, i-butyl (meth)acrylate, 2-ethylhexyl (meth)acrylate, and styrene are preferable. From the viewpoint of improving film dissolution, 2-methoxyethyl (meth)acrylate, propylene glycol mono methyl (meth)acrylate, 2-hydroxyethyl (meth)acrylate, 2-hydroxypropyl (meth)acrylate, glycidyl (meth)acrylate, furfuryl (meth)acrylate, and tetrahydrofurfuryl (meth)acrylate are more preferable. These monomers can be used alone, or two or more of these can be used in combination.

### <combination of monomers>

### (combination of monomer (a) and monomer (d))

As one embodiment of the resin component (A), a copolymer obtained by polymerizing a mixture of the monomer (a) and the monomer (d) can be mentioned.

The monomer (a) is contained in the mixture preferably by approximately 20 to 70 mass%, more preferably approximately 30 to 60 wt%. When the content of the monomer (a) is approximately 30 to 60 wt%, the film formed by using the antifouling coating composition obtained would have a stable film dissolution property, and can maintain the antifouling performance for a long period of time.

The copolymer can be a random copolymer, an alternating copolymer, a periodic copolymer, or a block copolymer of the monomer (a) and the monomer (d). The copolymer can be, for example, obtained by polymerizing monomer (a) and monomer (d) in the presence of a polymerization initiator. The same can be said for other combinations.

### (combination of monomer (b), monomer (c), and monomer (d))

As another embodiment of the resin component (A), a copolymer obtained by polymerizing a mixture of the monomer (b), monomer (c), and monomer (d) can be mentioned.

The monomer (b) and monomer (c) are contained in the mixture preferably by approximately 2 to 60 mass%, and the monomer (d) is contained in the mixture preferably by approximately 40 to 90 mass%. When the contents of the monomers are in such range, the film formed by using the antifouling coating composition obtained would have a stable film dissolution property, and can maintain the antifouling performance for a long period of time.

### (combination of monomer (a) to monomer (d))

As another embodiment of the resin component (A), a copolymer obtained by polymerizing a mixture of the monomer (a), monomer (b), monomer (c), and the monomer (d) can be mentioned.

The monomer (a) is contained in the mixture preferably by approximately 5 to 60 mass%, and the monomer (b) and monomer (c) are contained in the mixture preferably by approximately 2 to 20 mass%, and the monomer (d) is contained in the mixture preferably by approximately 60 to 80 mass%. When the contents of the monomers are in such range, the film formed by using the antifouling coating composition obtained would have a stable film dissolution property, and can maintain the antifouling performance for a long period of time.

### (monomer (d))

As another embodiment of the resin component (A), a (co)polymer obtained by using one or two or more of the compounds included as the monomer (d), and then polymerizing the monomer (d) can be mentioned. As the monomer (d), (meth)acrylic acid ester or styrene are preferable; 2-ethoxyethyl (meth)acrylate and 2-(2-ethoxyethoxy)ethyl (meth)acrylate are especially preferable. As the (co)polymer, two or more of these are preferably used. From the viewpoint of improving the water resistance, the content of the methacrylic ester in the monomer (d) of the (co) polymer is preferably approximately 20 to 70 mass%, and the content of the acrylic ester in the monomer (d) of the (co)polymer is preferably approximately 30 to 80 mass%. When the contents of the monomers are in such range, the film formed by using the antifouling coating composition obtained would have a stable film dissolution property, and can maintain the antifouling performance for a long period of time.

### <polymerization method and molecular weight>

As the polymerization initiator used in the polymerization reaction for example, azo compounds such as 2,2'-azobisisobutyronitrile (AIBN), 2,2'-azobis(2-methylbutyronitrile), and dimethyl-2,2'-azobisisobutylate; and peroxides such as benzoyl peroxide, di-tert-butylperoxide, tert-butyl peroxybenzoate, tert-butyl peroxyisopropyl carbonate, tert-butyl peroxy 2-ethylhexanoate, 1,1,3,3-tetramethylbutylperoxy-2-ethylhexanoate, and 1,1,3,3-tetramethylbutylperoxy neodecanoate can be mentioned. These polymerization initiators can be used alone, or two or more of these can be used in combination. As the polymerization initiator, AIBN, tert-butylperoxy 2-ethylhexanoate, 1,1,3,3-tetramethylbutylperoxy-2-ethylhexanoate, or 1,1,3,3-tetramethylbutylperoxy neodecanoate are especially preferable. By suitably controlling the amount of the polymerization initiator being used, the molecular weight of the resin component (A) can be adjusted. Here, chain transfer agent such as mercaptan and α-methyl styrene dimer can be used.

As the method of polymerization, solution polymerization, bulk polymerization, emulsion polymerization, suspension polymerization and the like can be mentioned. Among these, in view of the capability of obtaining the resin component (A) simply with accuracy, solution polymerization is preferable.

In the polymerization reaction, organic solvent can be used if necessary. As the organic solvent, for example, aromatic hydrocarbon solvents such as xylene and toluene; aliphatic hydrocarbon solvents such as hexane and heptane; ester solvents such as ethyl acetate, butyl acetate, isobutyl acetate, and methoxypropyl acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone, and methyl isobutyl ketone; can be mentioned. Among these, ester solvents, alcohol solvents, and aromatic hydrocarbon solvents are preferable, and butyl acetate, isobutyl acetate, butyl alcohol, propylene glycol monomethyl ether, toluene, and xylene are further preferable. These solvents can be used alone, or two or more of these can be used in combination.

The reaction temperature in the polymerization reaction shall be suitably controlled depending on the type of the polymerization initiator used and the like. The reaction temperature is usually 70 to 140°C, preferably 80 to 120°C. The reaction time in the polymerization reaction shall be suitably controlled depending on the reaction temperature and the like, and is usually approximately 4 to 8 hours. The polymerization reaction is preferably performed under inert gas atmosphere such as nitrogen gas and argon gas.

The weight average molecular weight (Mw) is preferably 10,000 to 100,000, especially preferably 20,000 to 70,000. When the Mw is in the range of 10,000 to 100,000, the coating film would not become brittle, and the dissolution of the coating film would be reasonable, thereby exhibiting the desired antifouling effect sufficiently. As the method for measuring Mw, gel permeation chromatography (GPC) can be mentioned for example.

### <content>

The content of the resin component (A) in the composition of the present invention is not particularly limited, and is usually 2 to 50 mass%, preferably 4 to 25 mass% in the solids of the composition of the present invention. When the content of the resin component (A) is in the range of 4 mass% to 25 mass%, suitable film dissolution speed and film property can be obtained in seawater, stable surface renewal property can be maintained for a long period of time, and thus desired antifouling effect can be realized sufficiently. In addition, superior recoating property of the coating film can be realized.

### 1-2. ester compound (B)

The ester compound (B) of the present invention comprises at least one ester compound represented by chemical formula (14), (15), (16) or (19) as defined below in more detail. Other ester compounds described below do not form part of the present invention.

### <ester compound (1)>

Ester compound (1) has a structure represented by chemical formula (1). Ester compound (1) is, for example, an aliphatic chain ester. For example, it is an ester compound obtained via formation of ester bonds between two monocarboxylic acids and a diol. 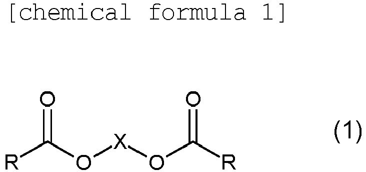 (Wherein, each of X and R is a C1-C22 hydrocarbon group which can include a hetero atom, and the hydrocarbon group is an aliphatic or an aromatic, and has a linear, branched, or cyclic structure. The two R are the same or different from each other.)

The ester compound represented by chemical formula (1) preferably includes the ester compound represented by chemical formula (7). 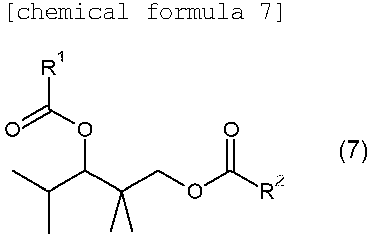 (Wherein, each of R¹ and R² is a C1-C22 hydrocarbon group which can include a hetero atom, and the hydrocarbon group is an aliphatic or an aromatic, and has a linear, branched, or cyclic structure.)

The number of carbon atoms in the hydrocarbon groups of X, R, R¹, and R² are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of X, R, R¹, and R², oxygen atom, sulfur atom, nitrogen atom and the like can be mentioned.

As a specific example of the ester compound (1), propylene glycol diacetate, 1,3-butylene glycol diacetate, 1,2-pentanediol diacetate, 1,6-hexanediol diacetate, 2,2,4-trimethyl-1,3-pentanediol diacetate, 2 2,2,4-trimethyl-1,3-pentanediol diisobutyrate, 2,2,4-trimethyl-1,3-pentanediol di-2-methylbutyrate, 2,2,4-trimethyl-1,3-pentanediol dibenzoate, 1,4-cyclohexane dimethanol diisovalerate, 2,2,4-trimethyl-1,3-pentanediol di-2-ethylhexanoate, 1,4-cyclohexane dimethanol bis(2-ethylhexanoate) can be mentioned.

### <ester compound (2)>

Ester compound (2) has a structure represented by chemical formula (2). Ester compound (2) is, for example, a glycerol ester. For example, it is an ester compound obtained via formation of ester bonds between three monocarboxylic acids and a triol. 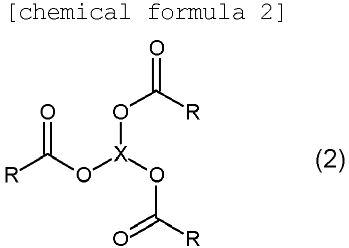 (Wherein, each of X and R is a C1-C22 hydrocarbon group which can include a hetero atom, and the hydrocarbon group is an aliphatic or an aromatic, and has a linear, branched, or cyclic structure. The three R are the same or different from each other.)

The ester compound represented by chemical formula (2) preferably comprises the ester compound represented by chemical formula (8). 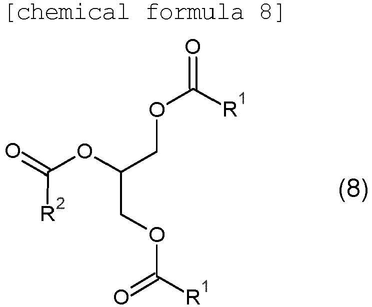 (Wherein, each of R¹ and R² is a C1-C22 hydrocarbon group which can include a hetero atom, and the hydrocarbon group is an aliphatic or an aromatic, and has a linear, branched, or cyclic structure. The two R¹ are the same or different from each other.)

The number of carbon atoms in the hydrocarbon groups of X, R, R¹, and R² are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of X, R, R¹, and R², oxygen atom, sulfur atom, nitrogen atom and the like can be mentioned.

As a specific example of the ester compound (2), glycerol triacetate, glycerol tributyrate, glycerol tris(2-ethylhexanoate), glycerol trioctanoate, glycerol trilaurate, glycerol tristearate, and glycerol trioleate can be mentioned.

### <ester compound (3)>

Ester compound (3) has a structure represented by chemical formula (3). When R¹ or R² includes a hydroxyl group, acetyl group, or phenyloxiranyl group, ester compound (3) is an ester compound obtained via formation of ester bond between hydroxycarboxylic acid, acetylated hydroxycarboxylic acid, or phenyloxiranyl group-includeing carboxylic acid and a mono alcohol; or a hydroxy-containing ester compound obtained via formation of ester bond between one of the hydroxyl group of poly alcohol and a mono carboxylic acid. When R² has a cyclic structure, ester compound (3) is an aliphatic cyclic ester compound obtained via formation of ester bond between a mono carboxylic acid having a cyclic structure and a mono alcohol. When R¹ or R² has an aromatic ring including a hetero atom, ester compound (3) is an aromatic ester compound obtained via formation of ester bond between a mono carboxylic acid having an aromatic ring including a hetero atom and a mono alcohol; or an aromatic ester compound obtained via formation of ester bond between a mono carboxylic acid and a mono alcohol having an aromatic ring including a hetero atom. 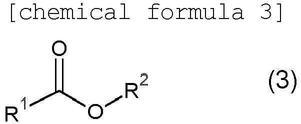 (Wherein, each of R¹ and R² is a C1-C22 hydrocarbon group which can include a hetero atom, and the hydrocarbon group is an aliphatic or an aromatic, and has a linear, branched, or cyclic structure. R¹ or R² includes a hydroxyl group, acetyl group, or phenyloxiranyl group; or R² has a ring structure or two or more branched structure; or R¹ or R² has an aromatic ring including a hetero atom.)

The number of carbon atoms in the hydrocarbon groups of R¹ and R² are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of R¹ and R², oxygen atom, sulfur atom, nitrogen atom and the like can be mentioned.

As a specific example when R¹ and R² of the ester compound (3) include a hydroxyl group, acetyl group, or phenyloxiranyl group; butyl ricinoleate, methyl acetyl ricinoleate, isopentyl lactate, menthyl lactate, hexadecyl lactate, 3-hydroxy-2,2,4-trimethylpentyl isobutyrate, glycerol monooleate, glycerol monoisostearate, ethyl 3-phenylglycidate, ethyl 3-methyl-3-phenylglycidate and the like can be mentioned.

When R² of ester compound (3) has a ring structure or two or more branched structure, ester compound (3) preferably includes an ester compound represented by chemical formula (12). 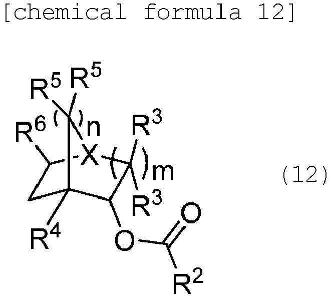 (Wherein, each of R³, R⁴, R⁵, and R⁶ is a hydrogen atom or a C1-C5 hydrocarbon group which can include a hetero atom, and the hydrocarbon group is an aliphatic or an aromatic, and has a linear, branched, or cyclic structure. Each of n and m is an integer of 0 to 5. X is a C0-C5 hydrocarbon group which can include a hetero atom. Two R³ are the same or different from each other. Two R⁵ are the same or different from each other. When n is 0 and X is an oxygen atom, the ester compound represented by chemical formula (12) is a tetrahydrofuran monocarboxylic acid ester having a 5-membered ring structure of monocycles.)

Ester compound represented by chemical formula (12) preferably comprises an ester compound represented by chemical formula (13).

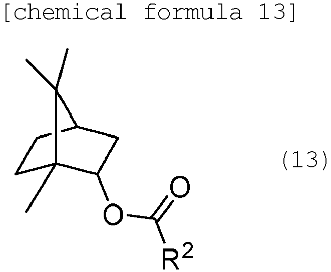

The number of carbon atoms in the hydrocarbon groups of R³, R⁴, R⁵, and R⁶ are, for example, 1, 2, 3, 4, or 5, and can be in the range between the two values exemplified herein. The number of carbon atoms in X is, for example, 0, 1, 2, 3, 4, or 5, and can be in the range between the two values exemplified herein. When the number of carbon atoms in X is 0, X is a hetero atom-containing group containing no carbon atom, and represents O, S, NH and the like for example. n and m are, for example, 0, 1, 2, 3, 4, or 5, and can be in the range between the two values exemplified herein.

As a specific example when R² of ester compound (3) has a cyclic structure or two or more branched structure, 3,7-dimethyl-6-octen-1-ol acetate, terpinyl acetate, 4-tert-butyl cyclohexyl acetate, menthyl acetate, isobornyl acetate, isobornyl ethylate, isobornyl stearate, methyl dihydrojasmonate, 3,4-epoxycyclohexylmethyl 3,4-epoxycyclohexanecarboxylate and the like can be mentioned.

As a specific example when R¹ or R² of ester compound (3) has an aromatic ring including a hetero atom, furfuryl acetate, tetrahydrofurfuryl acetate, ethyl 2-furan carboxylate, tetrahydrofurfuryl propionate, n-octyl 2-furan carboxylate, isoamyl 2-furan carboxylate and the like can be mentioned.

### <ester compound (4)>

Ester compound (4) has a structure represented by chemical formula (4). Ester compound (4) is an ester compound obtained via formation of ester bond between a hydroxy tricarboxylic acid and three mono alcohols. 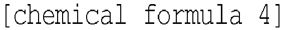 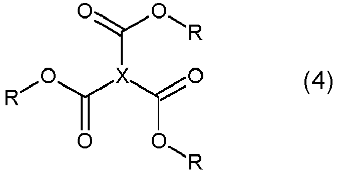 (Wherein, each of X and R is a C1-C22 hydrocarbon group which can include a hetero atom, and the hydrocarbon group is an aliphatic or an aromatic, and has a linear, branched, or cyclic structure. The three R are the same or different from each other.)

Ester compound (4) preferably includes an ester compound represented by chemical formula (6). 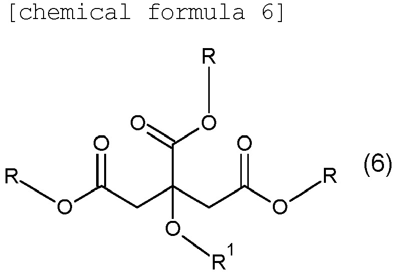 (Wherein, R¹ is a hydrogen atom or C1-C22 hydrocarbon group which includes an acyl group or an acetyl group and can include a hetero atom.)

The number of carbon atoms in the hydrocarbon groups of X, R, and R¹ are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of X, R, and R¹, oxygen atom, sulfur atom, nitrogen atom and the like can be mentioned.

As a specific example of ester compound (4), triethylmethane tricarboxylate, triethyl n-butyrate, triethyl trimesate, triethyl citrate, triethyl acetyl citrate, tributyl citrate, tributyl acetyl citrate, 2-ethylhexyl citrate, 2-ethylhexyl acetyl citrate, triethyl cyclohexane-1,2,4-tricarboxylate and the like can be mentioned.

### <ester compound (5)>

Ester compound (5) has a structure represented by chemical formula (5). Ester compound (5) is, for example, an aliphatic cyclic ester compound obtained via formation of ester bond between a dicarboxylic acid having a cyclic structure and two mono alcohols. 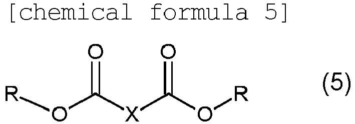 (Wherein, each of X and R is a C1-C22 hydrocarbon group which can include a hetero atom, and the hydrocarbon group is an aliphatic or an aromatic, and has a linear, branched, or cyclic structure. The two R are the same or different from each other.)

Ester compound (5) preferably comprises at least one ester compound represented by chemical formula (14) to chemical formula (19) . 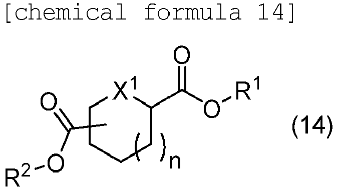 (Wherein, X¹ is a C0-C6 group which can include a hetero atom. When the number of carbon atoms in X¹ is 0, X¹ is a hetero atom-containing group containing no carbon atom, and represents O, S, NH and the like for example. Each of R¹ and R² is a C1-C22 hydrocarbon group which can include a hetero atom, and the hydrocarbon group is an aliphatic or an aromatic, and has a linear, branched, or cyclic structure. n is an integer of 0 to 5. The substituent group having R² is bonded to either one of the atoms structuring the cyclic structure.) 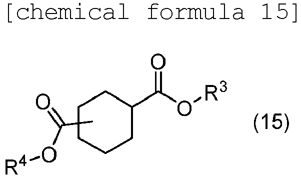 (Wherein, each of R³ and R⁴ is a C1-C22 hydrocarbon group which can include a hetero atom, and the hydrocarbon group is an aliphatic or an aromatic, and has a linear, branched, or cyclic structure. The substituent group having R⁴ is bonded to either one of the atoms structuring the cyclic structure.) 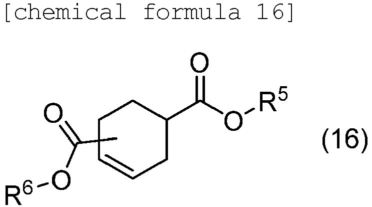 (Wherein, each of R⁵ and R⁶ is a C1-C22 hydrocarbon group which can include a hetero atom, and the hydrocarbon group is an aliphatic or an aromatic, and has a linear, branched, or cyclic structure. The substituent group having R⁶ is bonded to either one of the atoms structuring the cyclic structure.) 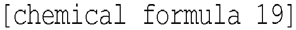 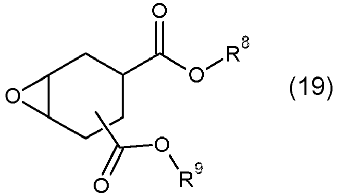 (Wherein, each of R⁸ and R⁹ is a C1-C22 hydrocarbon group which can include a hetero atom, and the hydrocarbon group is an aliphatic or an aromatic, and has a linear, branched, or cyclic structure. The substituent group having R⁹ is bonded to either one of the atoms structuring the cyclic structure.)

The number of carbon atoms in the hydrocarbon groups of X, R, R¹ to R⁹ are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. The number of carbon atoms in X¹ is preferably 0 to 5, and is particularly, for example, 0, 1, 2, 3, 4, or 5, and can be in the range between the two values exemplified herein. As the hetero atom of X, X¹, R, R¹ to R⁹, oxygen atom, sulfur atom, nitrogen atom and the like can be mentioned.

Each of n is, for example, 0, 1, 2, 3, 4, or 5, and can be in the range between the two values exemplified herein. When n is 0 and X is an oxygen atom, the ester compound represented by chemical formula (14) is a tetrahydrofuran dicarboxylic acid ester having a 5-membered ring structure.)

As the specific example of ester compound (5), diisononyl 2,5-furandicarboxylate, di-n-decyl 3,4-furandicarboxylate, diisononyl 2,5-tetrahydrofurancarboxylate, di-2-ethylhexyl 3,4-tetrahydrofurancarboxylate, dimethyl 1,4-cyclohexanedicarboxylate, diethyl 1,1-cyclohexanedicarboxylate, diethyl 1,2-cyclohexanedicarboxyate, diethyl 1,4-cyclohexanedicarboxylate, diglycidyl 1,2-cyclohexanedicarboxylate, dimethyl 1,4-cyclohexanedione-2,5-dicarboxylate, diethyl 1,4-cyclohexanedione-2,5-dicarboxylate, di-2-ethylhexyl 4-cyclohexene-1,2-dicarboxylate, diisononyl 1,2-cyclohexanedicarboxylate, diisononyl 1,3-cyclohexanedicarboxylate, diisononyl 1,4-cyclohexanedicarboxylate, di-2-ethylhexyl 4,5-epoxycyclohexane-1,2-dicarboxylate, distearyl 4,5-epoxycyclohexane-1,2-dicarboxylate, diepoxystearyl 4,5-epoxycyclohexane-1,2-dicarboxylate and the like can be mentioned.

### <method for obtaining or manufacturing ester compound (B), formulation method thereof, and formulation amount>

There is no particular limitation regarding ester compound (B), and those manufactured by known manufacturing method, commercially available product, and those available as reagent and the like can be used.

As a known manufacturing method for example, dehydration condensation reaction of carboxylic acids and alcohols, transesterification reaction of esters and alcohols, and esterification reaction of carboxylic acid chlorides and alcohols can be mentioned. Here, some of the ester compounds can be manufactured by hydrogenating the unsaturated portion of a commercially available analogous compound, or by cyclizing a commercially available linear ester compound.

There is no particular limitation on how ester compound (B) of the present invention is formulated into the coating composition. The ester compound (B) can be formulated when during the coating dispersion process, or can be formulated during the final process.

The ester compound (B) of the present invention is contained by 0.1 to 15 mass%, preferably 0.4 to 10 mass%, and especially preferably 0.5 to 8 mass% in the solids of the composition of the present invention. When the content of the ester compound (B) is in the afore-mentioned range, the dissolution speed of the film would be constant, thereby maintaining antifouling property for a long period of time. Further, no film defect (cracks and the like) would not occur in the antifouling coating film after allowing the film be immersed in seawater for a predetermined period.

When the content ratio of resin component (A) and ester compound (B) (converted as solid content) by mass ratio (resin component (A)/ester compound (B)) is 0.5 to 60, the effect of stabilizing the film dissolution speed in the later stage (stage after being immersed in seawater) would be exhibited prominently. When the ratio is in the range of 0.5 to 40, the effect is exhibited further.

### 1-3. other components

In the present invention the antifouling coating composition comprises an antifouling agent (C) in addition to the resin component (A) and ester compound (B). The antifouling coating composition can be formulated with thermoplastic resin (D), other resin (E), other additives (F) and the like in addition to the resin component (A) and ester compound (B), if necessary. Accordingly, a further superior antifouling effect can be achieved.

### <antifouling agent (C)>

As the antifouling agent (C), there is no particular limitation so long as it is a substance having a killing or repellent effect to marine fouling organisms. For example, an inorganic chemical and an organic chemical can be mentioned.

As the inorganic chemical for example, cuprous oxide, cuprous thiocyanate (generic name: copper rhodanide), cupro-nickel, copper powder and the like can be mentioned. Among these, cuprous oxide and copper rhodanide are particularly preferable.

As the organic chemical for example, organic copper compounds such as copper 2-mercaptopyridine-N-oxide (generic name: copper pyrithione) and the like; organic zinc compounds such as zinc 2-mercaptopyridine-N-oxide (generic name: zinc pyrithione), zinc ethylenebis(dithiocarbamate) (generic name: zineb), zinc bis(dimethyldithiocarbamate) (generic name: ziram), bis(dimethyldithiocarbamate) ethylenebis(dithiocarbamate)dizinc (generic name: polycarbamate) and the like; organic boron compounds such as pyridine-triphenylborane, 4-isopropylpyridine-diphenylmethylborane, 4-phenylpyridine-diphenylborane, triphenylboron-n-octadecylamine, triphenyl[3-(2-ethylhexyloxy)propylamine]boron and the like; maleimide compounds such as 2,4,6-trichloromaleimide, N-(2,6-diethylphenyl) 2,3-dichloromaleimide and the like; and other compounds such as 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2,4,5,6-tetrachloroisophthalonitrile (generic name: Chlorothalonil), N-dichlorofluoromethylthio-N',N'-dimethyl-N-p-tolylsulfamide (generic name: Tolylfluanid), N-dichloromethylthio-N',N'-dimethyl-N-phenylsulfamide (generic name: Dichlofluanid), 2-(4-thiazolyl)benzimidazole (generic name: Thiabendazole), 3-(benzo[b]thien-2-yl)-5,6-dihydro-1,4,2-oxathiazine-4-oxide (generic name: Bethoxazin), 2-(p-chlorophenyl)-3-cyano-4-bromo-5-trifluoromethyl pyrrole (generic name: ECONEA 028), 4-[1-(2,3-dimethylphenyl)ethyl]-1H-imidazole (generic name: Medetomidine) and the like can be mentioned. Among these, zinc pyrithione, copper pyrithione, pyridine-triphenylborane, 4-isopropylpyridine-diphenylmethylborane, Bethoxazin, Zineb, Sea-nine 211, and Irgarol 1051 are preferable, and copper pyrithione, zinc pyrithione, Sea-nine 211, pyridine-triphenylborane, and Bethoxazin are more preferable. These antifouling agents can be used alone, or two or more of these can be used in combination.

The content of the antifouling agent (C) in the composition of the present invention is not particularly limited. Here, the content in the solids of the composition of the present invention is usually 0.1 to 75 mass%, preferably 1 to 60 mass%. When the content of the antifouling agent (C) is less than 0.1 mass%, sufficient antifouling effect may not be achieved. When the content of the antifouling agent (C) exceeds 75 mass%, the coating film formed would become weak, and the adhesion property with the object onto which the coating film is formed would become weak. Therefore, function as the antifouling coating film cannot be fully realized.

### <thermoplastic resin (D)>

As the thermoplastic resin (D) for example, rosin, rosin derivative, and metal salts thereof, monocarboxylic acid and salt thereof, or alicyclic hydrocarbon resin and the like can be mentioned.

As the rosin, tall oil rosin, gum rosin, wood rosin and the like can be exemplified. As the rosin derivative, hydrogenated rosin, disproportionated rosin, maleic acid modified rosin, formylated rosin, polymerized rosin and the like can be exemplified. Reactant of metal compound and rosin can be used as the metal salt of rosin and metal salt of rosin derivative. As the metal salt of rosin for example, gum rosin zinc (or copper) salt, wood rosin zinc (or copper) salt, tall oil rosin zinc (or copper) salt and the like can be mentioned. As the metal salt of rosin derivative, hydrogenated rosin zinc (or copper) salt, disproportionated rosin zinc (or copper) salt, maleic acid modified rosin zinc (or copper) salt, formylated rosin zinc (or copper) salt, polymerized rosin zinc (or copper) salt and the like can be mentioned.

As the monocarboxylic acid for example, fatty acid having approximately 5 to 30 carbon atoms, synthetic fatty acid, naphthenic acid and the like can be mentioned. As the salt of monocarboxylic acid, copper salt, zinc salt, magnesium salt, calcium salt and the like can be mentioned.

As the alicyclic hydrocarbon resin, Quintone 1500, Quintone 1525L, and Quintone 1700 (product name, available from Zeon Corporation) and the like can be mentioned as commercially available product for example.

Especially, in terms of providing adequate film hardness and water resistance to the composition of the present invention, the composition of the present invention preferably comprises at least one selected from rosin, rosin derivative, and metal salts thereof as the thermoplastic resin (D). Further, in terms of improving crack resistance and water resistance, the composition preferably comprises copper salt or zinc salt of rosin or rosin derivative.

The content of thermoplastic resin (D) in the composition of the present invention is usually 1 to 80 parts by mass, preferably 10 to 50 parts by mass with respect to 100 parts by mass of the resin component (A). When the content of thermoplastic resin (D) is less than 1 part by mass, effect for preventing adhesion of aquatic fouling organisms, especially during the anchorage period, cannot be exhibited sufficiently. When the content of thermoplastic resin (D) exceeds 80 parts by mass, defects in the coating film such as cracks and delamination tend to occur, thereby being unable to exhibit sufficient effect for preventing adhesion of aquatic fouling organisms. The content of the thermoplastic resin (D) is for example, 1, 5, 10, 15, 20, 25, 30, 35, 40, 45, 50, 55, 60, 65, 70, 75, or 80 parts by mass with respect to 100 parts by mass of the resin component (A), and can be in the range between the two values exemplified herein.

### <other resin (E)>

In the present invention, by allowing the antifouling coating composition to include other resin (E), cost can be reduced without deteriorating the effect of the present invention. In addition, synergistic effect with the property of the resin (E) can be obtained.

As the other resin (E), for example, alkyd resin, chloride rubber resin, vinyl resin, petroleum resin, (modified) terpene phenol resin, cellulose-based resin, vinyl ether resin, epoxy resin, zwitterionic compound-containing resin and the like can be mentioned.

In the present invention the other resin (E) in the composition can be contained in a range which does not deteriorate adequate film dissolution speed and film property in seawater. Such content is 1 to 200 parts by mass, preferably 20 to 100 parts by mass with respect to 100 parts by mass of the resin component (A).

### <other additives (F)>

Further, if necessary, in the present invention the antifouling coating composition can further include pigment, dye, antifoaming agent, anti-sagging agent, dispersant, anti-settling agent, dehydrating agent, plasticizer, organic solvent and the like, in a range which does not deteriorate adequate film dissolution speed and film property in seawater.

### 2. manufacturing method of antifouling coating composition

In the present invention the antifouling coating composition can be manufactured by mixing and dispersing a mixture solution including the resin component (A), ester compound (B), and other additives.

The content of the resin component, antifouling agent and the like in the mixture solution shall be adjusted so that the content of the resin component, antifouling agent and the like in the antifouling coating composition would be satisfied.

Regarding the mixture solution, the ingredients such as resin component, antifouling agent and the like are preferably dissolved or dispersed in the solvent. As the solvent, organic solvents similar to those mentioned above can be used.

As the disperser for example, the one which can be used as a micro-pulverizer can be suitably used. For example, a commercially available homo mixer, sand mill, bead mill and the like can be used. Furthermore, the mixed solution can be mixed and dispersed by using a stirrer-equipped container containing glass beads for mixing and dispersing.

### 3. method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention prevents adhesion of aquatic fouling organisms by the gradual dissolution of the surface of the antifouling coating film such that the surface of the coating film is continually renewed. After the dissolution of the coating film, the antifouling effect can be continuously exhibited by recoating the composition.

Examples of objects on which a coating film can be formed include ships (in particular, ship bottoms), fishing tools, and structures submerged in seawater. Examples of the fishing tools include fishing nets for use in aquaculture or in fixed netting, and fishing net accessories such as ropes and floats attached to fishing nets. Examples of the structures submerged in seawater include power plant aqueducts, bridges, and port facilities.

The antifouling coating film can be formed by applying the antifouling coating composition onto the surface (entirely or partially) of an object on which the coating film is to be formed. Examples of the coating method include brush coating, spray coating, dipping, flow coating, and spin coating. These coating methods can be employed singly or in combination. The coating composition is dried after the application. The drying temperature can be room temperature. The drying time can be suitably selected depending on the thickness of the coating film and the like.

The antifouling coating film produced using the above antifouling coating composition can exhibit suitable dissolving rate and properties of the coating film in seawater. In addition, the stable surface renewal property can remain constant for a long period of time and a desired antifouling effect can be effectively exerted. Also, the coating film can advantageously exert excellent recoating performance.

The thickness of the antifouling coating film can be suitably selected depending on the type of an object on which the coating film is to be formed, the navigation speed of a ship, the seawater temperature and the like. For example, when the object on which a coating film is formed is a ship bottom, the thickness of the antifouling coating film is usually 50 to 700 µm, and preferably 100 to 500 µm.

In the present invention the antifouling coating film has a suitable hardness. Specifically, the antifouling coating film has a hardness sufficient enough to cause no coating film defects such as cold flow.

The coated object of the present invention has the antifouling coating film on its surface. The coated object of the present invention can have the antifouling coating film on the entire surface thereof or on the partial surface thereof.

The coated object of the present invention is provided with a coating film having stable long-term surface renewal property and excellent recoating performance since the suitable dissolving rate and properties of the coating film in seawater are improved. Accordingly, the coated object can be preferably applied for the above ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms.

Further, the hydrolysis speed of the antifouling coating film is controlled adequately. Accordingly, the ship can maintain the antifouling performance for a long period of time. For example, when the ship is in a static state such as during the anchorage period and during the rigging period, adhesion and accumulation of the aquatic fouling organisms hardly occur, thereby exhibiting antifouling effect for a long period of time.

In addition, the surface of the antifouling coating film is basically free from cracks or peeling even after a long period of time. Accordingly, it is unnecessary to completely remove the existing coating film before re-forming a new coating film. Thus, by directly recoating the antifouling coating film composition, the antifouling coating film can be effectively formed. This makes it possible to continuously maintain the antifouling performance in a simple and inexpensive manner.

### EXAMPLE

Examples and the like are provided hereinafter, and further clarifies characteristics of the present invention. The present invention, however, is not limited to these Examples.

Examples and the like are provided hereinafter, and further clarifies characteristics of the present invention. The present invention, however, is not limited to these Examples.

In each of Production Examples, Comparative Production Examples, Examples, and Comparative Examples, "%" denotes "% by mass". The viscosity was measured at 25°C using a Brookfield viscometer. The weight-average molecular weight (Mw) was determined by gel permeation chromatography (GPC) (using a polystyrene standard). GPC was performed under the following conditions.
Equipment: HLC-8220 GPC (available from Tosoh Corporation)
Column: TSK-gel Super HZM-M (available from Tosoh Corporation), two columns used
Flow rate: 0.35 mL/min
Detector: RI
Column thermostat temperature: 40°C
Developing solvent: THF

The non-volatile content is a value determined in accordance with JIS K 5601-1-2:1999 (ISO 3251:1993) "Testing methods for paint components-Determination of non-volatile matter content".

Solids is a value calculated by rounding the value of non-volataile content obtained by the above method to one decimal place.

The formulation among of each component shown in Table 1 are represented in grams.

Hereinafter, production example of copolymers used as the resin component (A) in the Examples will be shown.

### 1. production example

### <production example 1 (production of solution (b,c)-1 containing monomer (b) and monomer (c)>

To a flask equipped with a thermometer, reflux condenser, stirrer, and dropping funnel, 270 g of propylene glycol monomethyl ether (PGM), 96 g of zinc oxide, and 3 g of water were charged, and the mixture was heated to 75°C. Subsequently, a mixture of 85 g of acrylic acid and 300 g of naphthenic acid (acid value 220 mg KOH/g) was added dropwise over 3 hours. After dropwise addition, the mixture was aged further for 2 hours, thereby obtaining a pale yellow transparent liquid. The liquid was cooled, followed by addition of PGM so that the non-volatile content would be 50%, thereby obtaining a monomer (b) and monomer (c) containing solution-1. The non-volatile content of this solution was 50.3%.

### <production example 2 (production of solution (b,c)-2 containing monomer (b) and monomer (c)>

To a flask equipped with a thermometer, reflux condenser, stirrer, and dropping funnel, 350 g of propylene glycol monomethyl ether (PGM), 96 g of copper hydroxide, and 3 g of water were charged, and the mixture was heated to 75°C. Subsequently, a mixture of 70 g of acrylic acid and 330 g of hydrogenated rosin (HYPALE CH, available from ARAKAWA CHEMICAL INDUSTRIES, LTD.) was added dropwise over 3 hours. After dropwise addition, the mixture was aged further for 5 hours, thereby obtaining a dark green transparent liquid. The liquid was cooled, followed by addition of PGM so that the non-volatile content would be 50%, thereby obtaining a monomer (b) and monomer (c) containing solution-2. The non-volatile content of this solution was 50.2%.

### <production example of copolymer solution>

### <production example 3 (production of copolymer solution A-1)>

To a flask equipped with a thermometer, reflux condenser, stirrer, and dropping funnel, 200 g of xylene was charged. Under nitrogen atmosphere with agitation at 85±5°C, a mixture of 250 g of triisopropyl silyl methacrylate, 30 g of methyl methacrylate, 50 g of 2-methoxy ethyl acrylate, 170 g of 2-methoxyethyl methacrylate, and 5.3 g of 1,1,3,3-tetramethylbutyl peroxy-2-ethyl hexanoate as a polymerization initiator was added dropwise over 2 hours. The reaction mixture was agitated at the same temperature for 1 hour, and then 0.3 g of 1,1,3,3-tetramethylbutyl peroxy-2-ethyl hexanoate was added every 1 hour for 5 times, thereby completing the polymerization reaction. Xylene was added so that the non-volatile content would be 50%, and the product was dissolved to give the copolymer solution A-1. Viscosity of the copolymer solution obtained was 310 mPa·s (25°C), non-volatile content was 49.8%, and Mw was 49,100.

### <production example 4 to production example 14 (production of copolymer solutions A-2 to A-12)>

Organic solvent, monomer, and polymerization initiator shown in Table 1 were used by the amount mentioned in the table, and polymerization was performed by processes similar to those of production example 3, thereby obtaining copolymer solutions A-2 to A-12. Non-volatile content, viscosity, and weight average molecular weight of each of the copolymer solutions were measured. Results are shown in Table 1.

**[Table 1]**

| Table 1 | | production example | | | | | | | | | | | |
|---|---|---|---|---|---|---|---|---|---|---|---|---|---|
| | | 3 | 4 | 5 | 6 | 7 | 8 | 9 | 10 | 11 | 12 | 13 | 14 |
| | | copolymer (A) | | | | | | | | | | | |
| organic solvent in initial reactor | xylene | 200 | 400 | 200 | 200 | 300 | 200 | 100 | 180 | 350 | 450 | 350 | 195 |
| | propylene glycol monomethyl ether | | | | | | | 100 | 20 | | | | |
| monomer (a) | triisopropylsilyl acrylate | | | 270 | 120 | | 120 | | 270 | | | | |
| | triisopropylsilyl methacrylate | 250 | 250 | | 150 | 180 | 120 | | | | | | |
| | tri(2-ethylhexyl)silyl methacrylate | | | | | | 30 | | | | | | 200 |
| monomer (b, c) | monomer (b, c)-1 | | | | | | | 100 | | | | | |
| | monomer (b, c)-2 | | | | | | | | 10 | | | | |
| monomer (d) | ethyl acrylate | | | | | | | 300 | 20 | | | | |
| | methyl methacrylate | 30 | 30 | 200 | 100 | 40 | 90 | | 150 | | | 5 | 150 |
| | n-butyl acrylate | | | | 20 | 80 | 20 | | | 250 | 300 | 250 | 40 |
| | 2-methoxyethyl acrylate | 50 | 50 | 30 | 10 | 40 | 10 | | 30 | | | | |
| | 2-methoxyethyl methacrylate | 170 | 170 | | 100 | 100 | 80 | | 20 | 250 | | 220 | 110 |
| | 2-ethoxyethyl acrylate | | | | | | 10 | | | | | 10 | |
| | 2-ethoxyethyl methacrylate | | | | | | 10 | | | | | 5 | |
| | 2-(2-ethoxyethoxy)ethyl acrylate | | | | | | 10 | | | | | 5 | |
| | isobutyl methacrylate | | | | | 60 | | | | | 190 | | |
| | cyclohexyl acrylate | | | | | | | 100 | | | | 5 | |
| | styrene | | | | | | | | | | 10 | | |
| polymerization initiator | initial | 5.3 | 30.0 | 2.4 | 4.7 | 4.8 | 4.6 | 1.0 | 2.4 | 14.8 | 8.0 | 14.5 | 5.0 |
| | post addition 5 times | 0.3 | 0.3 | 0.3 | 0.2 | 0.3 | 0.4 | 0.7 | 0.3 | 0.8 | 0.3 | 0.8 | 0.6 |
| organic solvent added after completion of reaction | xylene | 300 | 0 | 300 | 300 | 200 | 300 | 300 | 300 | 150 | 50 | 150 | 305 |
| reaction temperature [°C] (within the range of ±5°C) | | 85 | 85 | 90 | 100 | 85 | 100 | 85 | 85 | 130 | 130 | 85 | 85 |
| property of copolymer | solids [%] | 50 | 60 | 50 | 50 | 50 | 50 | 50 | 50 | 50 | 50 | 50 | 50 |
| | weight average molecular weight [Mw] | 49,000 | 13,000 | 48,000 | 52,000 | 53,000 | 51,000 | 8,000 | 48,000 | 29,000 | 33,000 | 35,000 | 55,000 |
| | viscosity [mPa·s] (25°C) | 300 | 200 | 300 | 350 | 350 | 360 | 96 | 300 | 100 | 110 | 150 | 430 |
| | name | A-1 | A-2 | A-3 | A-4 | A-5 | A-6 | A-7 | A-8 | A-9 | A-10 | A-11 | A-12 |

### <production example 15 (production of polyester polyol)>

To the reactor, 146 g of adipic acid and 131 g of 1,4-butane diol were charged, and the mixture was agitated under normal pressure at 200°C while distilling generated water, thereby performing esterification reaction. When the amount of water generated became small, 0.02 g (70 ppm) of tetraisopropyl titanate was added, and the reaction was further proceeded while reducing the pressure to 100 to 200 mmHg. When the acid value reached 1.0 mg·KOH/g, degree of vacuum was gradually raised by a vacuum pump, thereby completing the reaction. Hydroxyl value of the polyester polyol obtained was 113.7 mg·KOH/g, acid value was 0.2 mg·KOH/g, and Mw was 3000. Here, acid value is a value measured in accordance with Standard Methods for the Analysis of Fats, Oils and Related Materials 2.3.1-2013, established by Japan Oil Chemists' Society, and hydroxyl value is a value measured in accordance with Standard Methods for the Analysis of Fats, Oils and Related Materials 2.3.6.2-1996, established by Japan Oil Chemists' Society.

### <production example 16 (production of copolymer A-13)>

84.2 g of polyester polyol produced by production example 15 and 17.1 g of isophorone diisocyanate (isocyanate index: 0.9) were charged into a reactor, and urethanization reaction was carried out under nitrogen atmosphere at 80 to 90°C with agitation. After one hour, 0.02 g of dibutyltin dilaurate was added, and the temperature was gradually raised to 100 to 105°C, while adding 5 g of toluene in the middle of the reaction to mitigate extreme increase in viscosity. After carrying out the reaction for 4 hours, the reaction mixture was cooled, and toluene was added to dissolve the content so that the non-volatile content would be 50%. The non-volatile content of the resin solution obtained was 50.2%, Mw was 28,800, and viscosity was 1690 mPa·s. The copolymer solution thus obtained is hereinafter referred to as copolymer A-13.

### <production example 17 (production of rosin zinc salt solution)>

To a flask equipped with a thermometer, reflux condenser, and a stirrer, 240 g of gum rosin available from China (WW) and 360 g of xylene were charged, and 120 g of zinc oxide was added so that all of the resin acid in the rosin would form zinc salt. The reaction mixture was dehydrated under reflux under reduced pressure for 3 hours at 70 to 80°C. Then, the reaction mixture was cooled and filtered to give a xylene solution of rosin zinc salt (dark brown transparent liquid, 50% solids). The non-volatile content of the xylene solution obtained was 50.4%.

### 2. Examples 1 to 106 and Comparative Examples 1 to 15 (production of coating composition)

The components shown in Table 2 to Table 11 were formulated by the ratio (mass%) shown in the Tables, and were mixed and dispersed with a glass bead having a diameter of 1.5 to 2.5 mm, thereby producing the coating composition.

### 3. test example

The following tests were performed with the coating compositions of Examples according to the present invention, Examples not according to the present invention and Comparative Examples.

### <test example 1 (rotary test)>

A tank was provided, in the center thereof, with a rotating drum having a diameter of 515 mm and a height of 440 mm to allow the rotation of the drum by a motor. The tank was also provided with a cooling apparatus for keeping the temperature of seawater constant, and an automatic pH controller for keeping the pH of the seawater constant.

Test plates were prepared for each coating composition in accordance with the following method.

First, an anti-corrosive coating film was formed by applying an anti-corrosive coating material (an epoxy vinyl-based A/C) onto a titanium plate (71 x 100 x 0.5 mm) such that the thickness after drying would be about 100 µm, followed by drying. Each of the antifouling coating compositions obtained in Examples according to the present invention, Examples not according to the present invention and Comparative Examples was applied onto the anti-corrosive coating film so that the thickness after drying would be about 300 µm. The applied coating was dried for 3 days at 40°C, and the test plate having the dry coating film with a thickness of about 300 µm was prepared.

One of the thus-prepared test plates was secured to the rotating drum of the rotary apparatus of the above-mentioned equipment and was made to contact the seawater, and the rotating drum was rotated at a speed of 20 knots. During the test, the seawater temperature was maintained at 25°C and the pH at 8.0 to 8.2; and the seawater was replaced once every week.

The initial thickness of the coating film and the remaining thickness of the coating film as measured every 3 months from the beginning of the test were determined using a laser focus displacement meter for each test plate, and the thickness of the dissolved coating film was calculated from the difference therebetween to give the dissolving amount of the coating film per month (µm/month). The measurement was conducted for a period of time mentioned in the Table, and the dissolving amount of the coating film was calculated every 3 months. Stability of the dissolving amount of the coating film was evaluated by the following method.
A: difference between average dissolving amount of the coating film per month for the past 3 months and the average dissolving amount of the coating film per month for the current 3 months is 5 µm/month or less.
B: difference between average dissolving amount of the coating film per month for the past 3 months and the average dissolving amount of the coating film per month for the current 3 months is 5 to 10 µm/month or less.
C: difference between average dissolving amount of the coating film per month for the past 3 months and the average dissolving amount of the coating film per month for the current 3 months is larger than 10 µm/month.
X: average dissolving amount of the coating film per month for the current 3 months is 1 µm/month or less.
-: all of the film coating dissolved during the 3 month period observation

After the rotary test was completed, the test plate was dried, and the surface of each coating film was visually inspected to evaluate the state of the coating film. Evaluation was performed as follows.

A: No defects observed.
B: Hairline cracks are slightly observed.
C: Hairline cracks are observed on the entire surface of the coating film.
X: Coating film defects such as large cracks, blisters or peel-offs are observed.

### <test example 2 (antifouling test)>

Each of the coating compositions obtained in Examples and Comparative Examples was applied onto both surfaces of a hard vinyl chloride plate (100 x 200 x 2 mm) such that the thickness of a dry coating film would be about 200 µm. The applied coating was dried for 3 days at room temperature (25°C), and the test plate having the dry coating film with a thickness of about 200 µm was prepared. This test plate was immersed at 1.5 m below sea level in Owase City, Mie Prefecture, Japan, and the test plate fouling due to attached objects was examined after a period mentioned in the Table has elapsed.

The state of the surface of the coating film was visually evaluated in accordance with criteria shown below.
A: Fouling organisms such as shellfish or algae do not attach, and slime hardly attaches.
B: Fouling organisms such as shellfish or algae do not attach, and slime thinly attaches (to the extent that the coating film surface is observable) and the slime can be removed when wiped softly with a brush.
C: Fouling organisms such as shellfish or algae do not attach, but slime thickly attaches (to the extent that the coating film surface is not observable) and the slime cannot be removed even when wiped strongly with a brush.
X: Fouling organisms such as shellfish or algae do attach.

### 4. test results

Test results are shown in Table 2 to Table 11. From these results, it can be seen that the coating film formed by using the coating composition of the present invention (Examples 1 to 106) can maintain stable film dissolution amount in all of the time periods when compared with the coating film formed by using the coating composition of Comparative Examples 1 to 15. Further, water resistance, anti-cracking property, and adhesion are superior, while fouling organisms such as shellfish or algae do not attach. Accordingly, long-term antifouling performance is high.

This result is achieved by the combination of resin component (A) and suitable ester compound (B), and shows the effect of the present invention which is stabilization of film dissolution amount by ester compound (B).

In addition, it is clear that this effect can be maintained when the composition is altered in various ways (Examples 80 to 106) .

### [Table 2]

**Table 2**

| component | | | Example | | | | | | | | | | |
|---|---|---|---|---|---|---|---|---|---|---|---|---|---|
| | | | 1* | 2* | 3 | 4* | 5* | 6* | 7* | 8* | 9* | 10* | 11* |
| resin component (A) | A-1 | | 31 | 31 | 31 | 31 | 31 | 31 | 31 | 31 | 31 | 31 | 31 |
| ester compound (B) | HDOA | | 1 | | | | | | | | | | |
| | TMPIB | | | 1 | | | | | | | | | |
| | CHMEH | | | | 1 | | | | | | | | |
| | TAAG | | | | | 1 | | | | | | | |
| | TBAG | | | | | | 1 | | | | | | |
| | TEHAG | | | | | | | 1 | | | | | |
| | LAHD | | | | | | | | 1 | | | | |
| | MISAG | | | | | | | | | 1 | | | |
| | ARAM | | | | | | | | | | 1 | | |
| | MPhGAE | | | | | | | | | | | 1 | |
| | TPA | | | | | | | | | | | | 1 |
| antifouling agent (C) | cuprous oxide | | 45 | 45 | 45 | 45 | 45 | 45 | 45 | 45 | 45 | 45 | 45 |
| | copper pyrithione | | 3 | 3 | 3 | 3 | 3 | 3 | 3 | 3 | 3 | 3 | 3 |
| other additives (F) [pigment] | red oxide | | 2 | 2 | 2 | 2 | 2 | 2 | 2 | 2 | 2 | 2 | 2 |
| | talc | | 2 | 2 | 2 | 2 | 2 | 2 | 2 | 2 | 2 | 2 | 2 |
| | zinc oxide | | 4 | 4 | 4 | 4 | 4 | 4 | 4 | 4 | 4 | 4 | 4 |
| | titanium oxide | | 1 | 1 | 1 | 1 | 1 | 1 | 1 | 1 | 1 | 1 | 1 |
| other additives (F) [dehydrating agent, anti-sagging agent] | tetraethoxy silane | | 1 | 1 | 1 | 1 | 1 | 1 | 1 | 1 | 1 | 1 | 1 |
| | aliphatic amide thixotropic agent | | 4 | 4 | 4 | 4 | 4 | 4 | 4 | 4 | 4 | 4 | 4 |
| solvent | xylene | | 6 | 6 | 6 | 6 | 6 | 6 | 6 | 6 | 6 | 6 | 6 |
| total | | | 100 | 100 | 100 | 100 | 100 | 100 | 100 | 100 | 100 | 100 | 100 |
| test example 1 rotary test | evaluation of average dissolving amount of coating film | 3 to 6 months | A | A | A | A | A | A | A | A | A | A | A |
| | | 6 to 9 months | A | A | A | A | A | A | A | A | A | A | A |
| | | 9 to 12 months | A | A | A | A | A | A | A | A | A | A | A |
| | | 12 to 15 months | A | A | A | A | A | A | A | A | A | A | A |
| | | 15 to 18 months | A | A | A | A | A | A | A | A | A | A | A |
| | | 18 to 21 months | A | A | A | A | A | A | A | A | A | A | A |
| | | 21 to 24 months | A | A | A | A | A | A | A | A | A | A | A |
| | evaluation of condition of coating film after 24 months | | A | A | A | A | A | A | A | A | A | A | A |
| test example 2 antifouling test | after 12 months | | A | A | A | A | A | A | A | A | A | A | A |
| | after 24 months | | A | A | A | A | A | A | A | A | A | A | A |

| | | | | | | | | | | | | | |
|---|---|---|---|---|---|---|---|---|---|---|---|---|---|
| * Example not according to the present invention | | | | | | | | | | | | | |

### [Table 3]

**Table 3**

| component | | | Example | | | | | | | | | | | |
|---|---|---|---|---|---|---|---|---|---|---|---|---|---|---|
| | | | 12* | 13* | 14* | 15* | 16* | 17* | 18* | 19* | 20* | 21* | 22* | 23* |
| resin component (A) | A-1 | | 31 | 31 | 31 | 31 | 31 | 31 | 31 | 31 | 31 | 31 | 31 | 31 |
| ester compound (B) | t-BCHA | | 1 | | | | | | | | | | | |
| | MENTA | | | 1 | | | | | | | | | | |
| | i-BoAc | | | | 1 | | | | | | | | | |
| | DHJAM | | | | | 1 | | | | | | | | |
| | ECHECH | | | | | | 1 | | | | | | | |
| | PATHF | | | | | | | 1 | | | | | | |
| | DMOA | | | | | | | | 1 | | | | | |
| | n-OFA | | | | | | | | | 1 | | | | |
| | TECA | | | | | | | | | | 1 | | | |
| | TEACA | | | | | | | | | | | 1 | | |
| | TBACA | | | | | | | | | | | | 1 | |
| | TEHACA | | | | | | | | | | | | | 1 |
| antifouling agent (C) | cuprous oxide | | 45 | 45 | 45 | 45 | 45 | 45 | 45 | 45 | 45 | 45 | 45 | 45 |
| | copper pyrithione | | 3 | 3 | 3 | 3 | 3 | 3 | 3 | 3 | 3 | 3 | 3 | 3 |
| other additives (F) [pigment] | red oxide | | 2 | 2 | 2 | 2 | 2 | 2 | 2 | 2 | 2 | 2 | 2 | 2 |
| | talc | | 2 | 2 | 2 | 2 | 2 | 2 | 2 | 2 | 2 | 2 | 2 | 2 |
| | zinc oxide | | 4 | 4 | 4 | 4 | 4 | 4 | 4 | 4 | 4 | 4 | 4 | 4 |
| | titanium oxide | | 1 | 1 | 1 | 1 | 1 | 1 | 1 | 1 | 1 | 1 | 1 | 1 |
| other additives (F) [dehydrating agent, anti-sagging agent] | tetraethoxy silane | | 1 | 1 | 1 | 1 | 1 | 1 | 1 | 1 | 1 | 1 | 1 | 1 |
| | aliphatic amide thixotropic agent | | 4 | 4 | 4 | 4 | 4 | 4 | 4 | 4 | 4 | 4 | 4 | 4 |
| solvent | xylene | | 6 | 6 | 6 | 6 | 6 | 6 | 6 | 6 | 6 | 6 | 6 | 6 |
| total | | | 100 | 100 | 100 | 100 | 100 | 100 | 100 | 100 | 100 | 100 | 100 | 100 |
| test example 1 rotary test | evaluation of average dissolving amount of coating film | 3 to 6 months | A | A | A | A | A | A | A | A | A | A | A | A |
| | | 6 to 9 months | A | A | A | A | A | A | A | A | A | A | A | A |
| | | 9 to 12 months | A | A | A | A | A | A | A | A | A | A | A | A |
| | | 12 to 15 months | A | A | A | A | A | A | A | A | A | A | A | A |
| | | 15 to 18 months | A | A | A | A | A | A | A | A | A | A | A | A |
| | | 18 to 21 months | A | A | A | A | A | A | A | A | A | A | A | A |
| | | 21 to 24 months | A | A | A | A | A | A | A | A | A | A | A | A |
| | evaluation of condition of coating film after 24 months | | A | A | A | A | A | A | A | A | A | A | A | A |
| test example 2 antifouling test | after 12 months | | A | A | A | A | A | A | A | A | A | A | A | A |
| | after 24 months | | A | A | A | A | A | A | A | A | A | A | A | A |

| | | | | | | | | | | | | | | |
|---|---|---|---|---|---|---|---|---|---|---|---|---|---|---|
| * Example not according to the present invention | | | | | | | | | | | | | | |

**[Table 4]**

| component | | | Example | | | | | | | | | | Comparativ e Example |
|---|---|---|---|---|---|---|---|---|---|---|---|---|---|
| | | | 24⁺ | 25⁺ | 26⁺ | 27⁺ | 28⁺ | 29⁺ | 30⁺ | 31⁺ | 32⁺ | 33⁺ | 1 |
| resin component (A) | A-1 | | 31 | 31 | 31 | 31 | 31 | 31 | 31 | 31 | 31 | 31 | 31 |
| ester compound (B) | DMCH | | 1 | | | | | | | | | | |
| | 1,1-DECH | | | 1 | | | | | | | | | |
| | 1,2-DECH | | | | 1 | | | | | | | | |
| | DGCH | | | | | 1 | | | | | | | |
| | DMCDO | | | | | | 1 | | | | | | |
| | DEHTH | | | | | | | 1 | | | | | |
| | DINCH | | | | | | | | 1 | | | | |
| | E-PS | | | | | | | | | 1 | | | |
| | EP-18 | | | | | | | | | | 1 | | |
| | E-PO | | | | | | | | | | | 1 | |
| antifouling agent (C) | cuprous oxide | | 45 | 45 | 45 | 45 | 45 | 45 | 45 | 45 | 45 | 45 | 45 |
| | copper pyrithione | | 3 | 3 | 3 | 3 | 3 | 3 | 3 | 3 | 3 | 3 | 3 |
| other additives (F) [pigment] | red oxide | | 2 | 2 | 2 | 2 | 2 | 2 | 2 | 2 | 2 | 2 | 2 |
| | talc | | 2 | 2 | 2 | 2 | 2 | 2 | 2 | 2 | 2 | 2 | 2 |
| | zinc oxide | | 4 | 4 | 4 | 4 | 4 | 4 | 4 | 4 | 4 | 4 | 4 |
| | titanium oxide | | 1 | 1 | 1 | 1 | 1 | 1 | 1 | 1 | 1 | 1 | 1 |
| other additives (F) [dehydrating agent, anti-sagging agent] | tetraethoxy silane | | 1 | 1 | 1 | 1 | 1 | 1 | 1 | 1 | 1 | 1 | 1 |
| | aliphatic amide thixotropic agent | | 4 | 4 | 4 | 4 | 4 | 4 | 4 | 4 | 4 | 4 | 4 |
| solvent | xylene | | 6 | 6 | 6 | 6 | 6 | 6 | 6 | 6 | 6 | 6 | 7 |
| total | | | 100 | 100 | 100 | 100 | 100 | 100 | 100 | 100 | 100 | 100 | 100 |
| test example 1 rotary test | evaluation of average dissolving amount of coating film | 3 to 6 months | A | A | A | A | A | A | A | A | A | A | X |
| | | 6 to 9 months | A | A | A | A | A | A | A | A | A | A | A |
| | | 9 to 12 months | A | A | A | A | A | A | A | A | A | A | B |
| | | 12 to 15 months | A | A | A | A | A | A | A | A | A | A | C |
| | | 15 to 18 months | A | A | A | A | A | A | A | A | A | A | C |
| | | 18 to 21 months | A | A | A | A | A | A | A | A | A | A | - |
| | | 21 to 24 months | A | A | A | A | A | A | A | A | A | A | |
| | evaluation of condition of coating film after 24 months | | A | A | A | A | A | A | A | A | A | A | |
| test example 2 antifouling test | after 12 months | | A | A | A | A | A | A | A | A | A | A | B |
| | after 24 months | | A | A | A | A | A | A | A | A | A | A | X |

| | | | | | | | | | | | | | |
|---|---|---|---|---|---|---|---|---|---|---|---|---|---|
| ⁺ Example according to the present invention | | | | | | | | | | | | | |

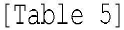

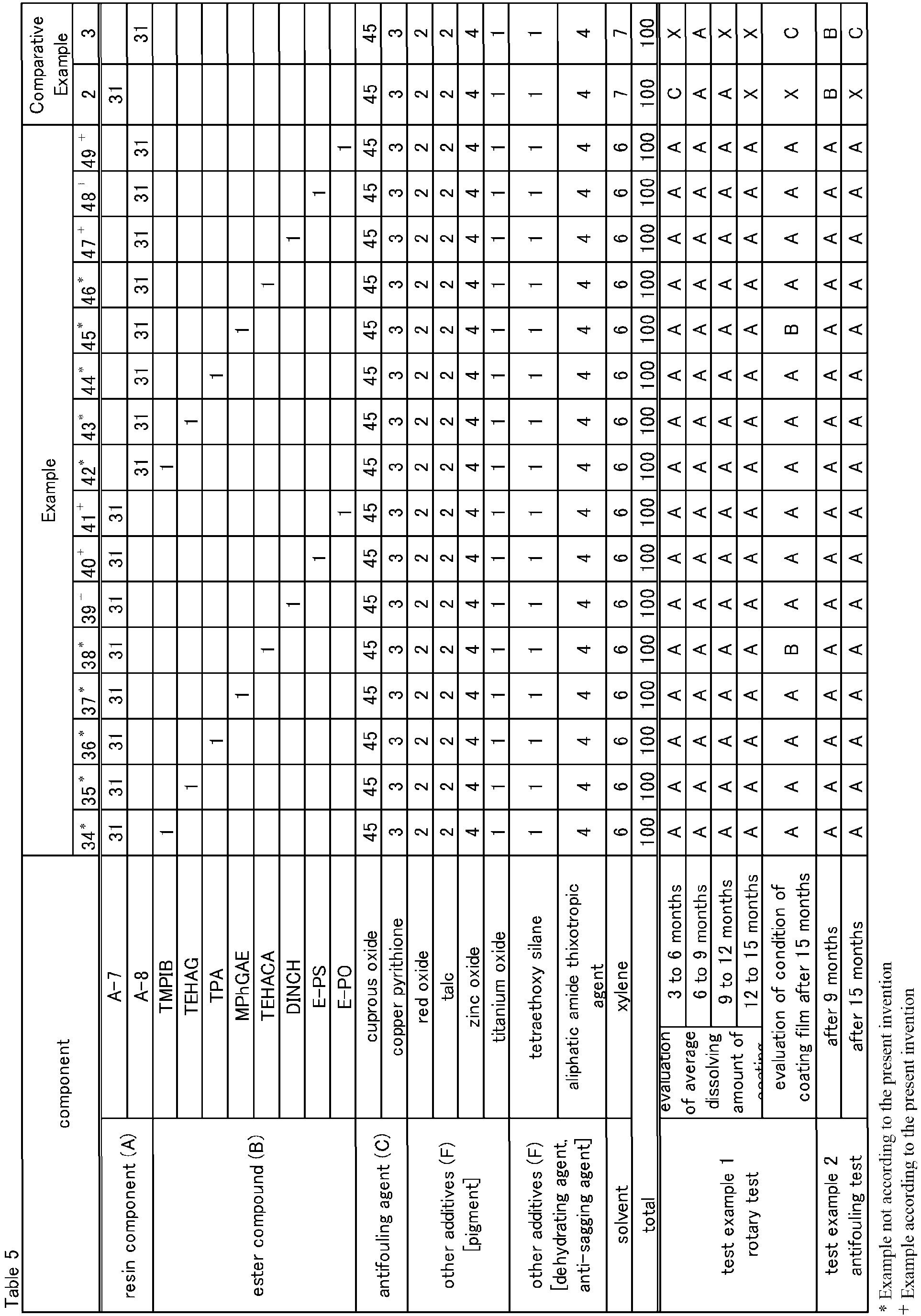

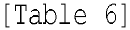

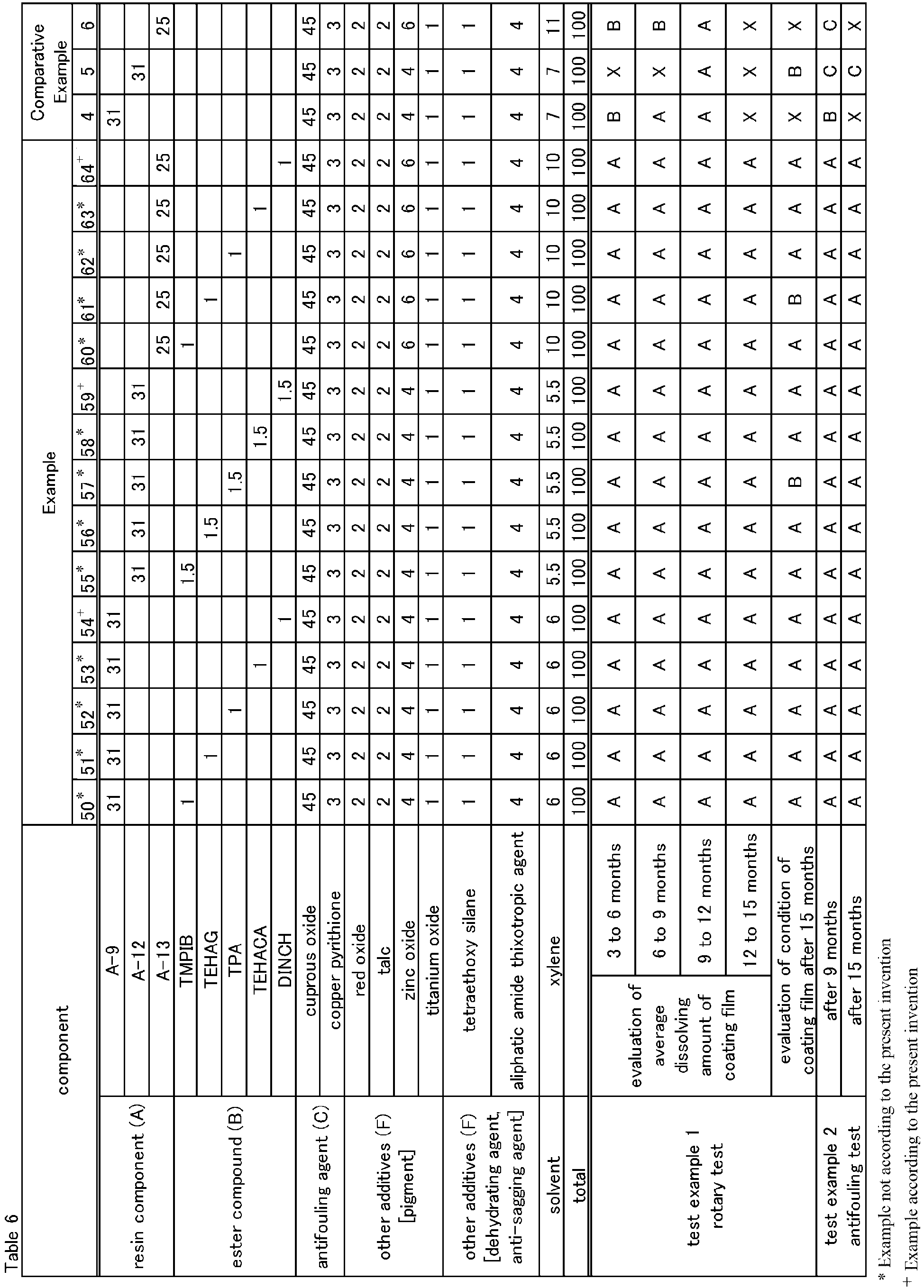

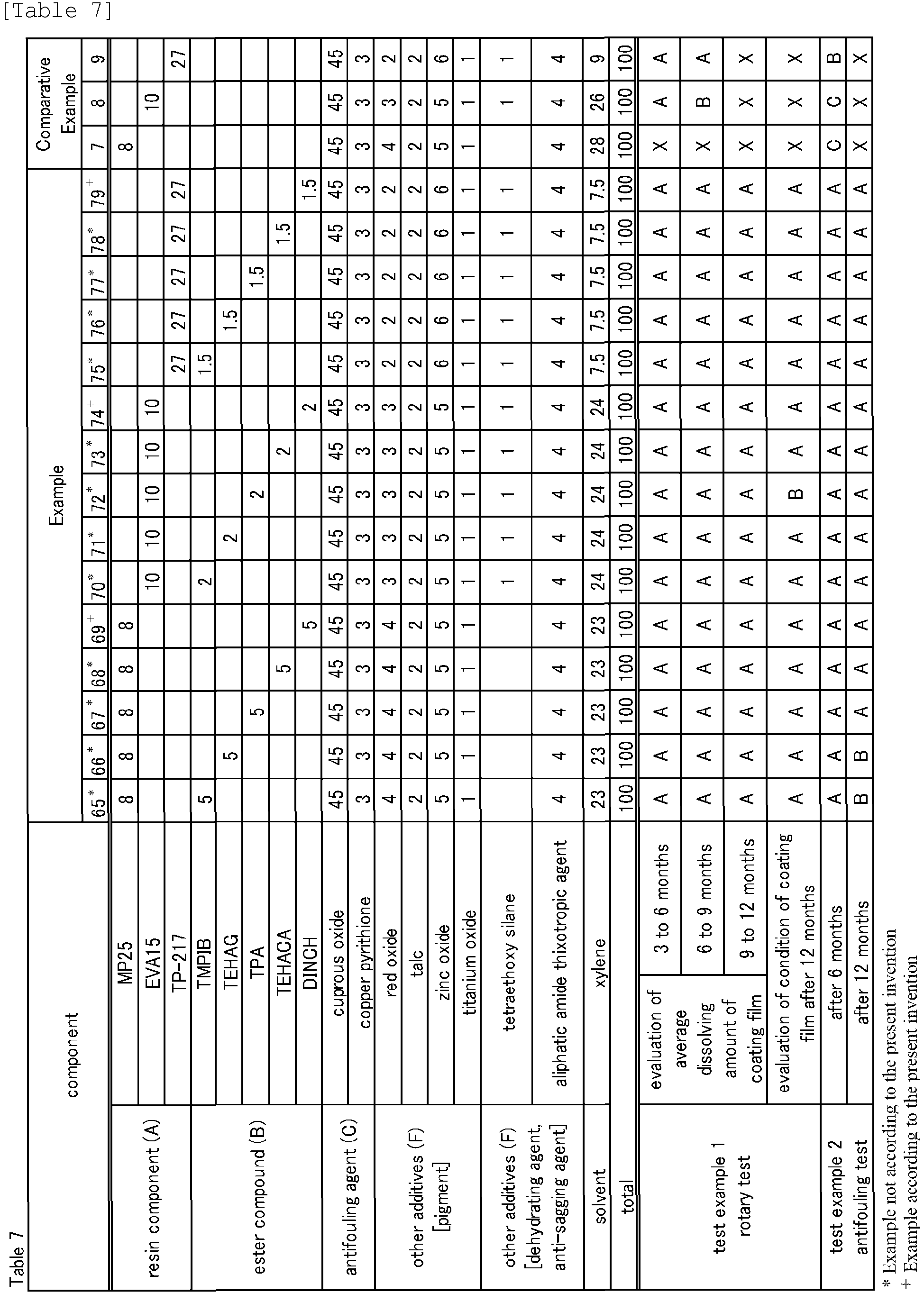

### [Table 8]

**Table 8**

| component | | | Example | | | | | |
|---|---|---|---|---|---|---|---|---|
| | | | 80* | 81* | 82* | 83* | 84⁺ | 85⁺ |
| resin component (A) | A-1 | | 19 | | 24.8 | | 15 | 15.19 |
| | A-2 | | | | | 20.6 | | |
| | A-3 | | 12 | | | | | |
| | A-4 | | | 28.5 | | | | |
| | A-8 | | | 2.5 | | | | |
| | A-10 | | | | | | | 6.51 |
| ester compound (B) | TMPIB | | 0.5 | | 1 | | | 0.5 |
| | TEHAG | | | 1 | | 0.5 | | |
| | MPhGAE | | | | 0.5 | | | |
| | TPA | | 1 | 1.5 | | 1.5 | | |
| | TEHACA | | 1 | | | | 1 | |
| | DINCH | | | | | | 1.5 | 1 |
| antifouling agent (C) | cuprous oxide | | 45 | 45 | 45 | 45 | 45 | 30 |
| | copper pyrithione | | 3 | 3 | 3 | 3 | 2 | 1.5 |
| | copper rhodanide | | | | | 0.5 | 0.5 | |
| | Zineb | | | | | 0.5 | | |
| | SeaNine | | | | | | 0.5 | 0.5 |
| thermoplastic resin (D) | rosin zinc salt solution | | | | 6.2 | 6.2 | | 9.3 |
| | hydrogenated rosin solution | | | | | | 1 | |
| | NT-RMZ | | | | | | 7.5 | |
| other additives (F) [pigment] | red oxide | | 2 | 2 | 2 | 2 | 2 | 2 |
| | talc | | 2 | 2 | 2 | 2 | 3 | 7 |
| | zinc oxide | | 4 | 4 | 4 | 4 | 2 | 14 |
| | titanium oxide | | 1 | 1 | 1 | 1 | 1 | 1 |
| other additives (F) | tetraethoxy silane | | 1 | 1 | 1 | 1 | 0.5 | 0.5 |
| | calcium sulfate anhydrite | | | | | | 0.5 | |
| | aliphatic amide thixotropic agent | | 4 | 4 | 4 | 4 | 3 | 3 |
| solvent | xylene | | 4.5 | 4.5 | 5.5 | 8.2 | 14 | 8 |
| total | | | 100 | 100 | 100 | 100 | 100 | 100 |
| test example 1 rotary test | evaluation of average dissolving amount of coating film | 3 to 6 months | A | A | A | A | A | A |
| | | 6 to 9 months | A | A | A | A | A | A |
| | | 9 to 12 months | A | A | A | A | A | A |
| | | 12 to 15 months | A | A | A | A | A | A |
| | | 15 to 18 months | A | A | A | A | A | A |
| | | 18 to 21 months | A | A | A | A | A | A |
| | | 21 to 24 months | A | A | A | A | A | A |
| | evaluation of condition of coating film after 24 months | | A | A | A | A | A | A |
| test example 2 antifouling test | after 12 months | | A | A | A | A | A | A |
| | after 24 months | | A | A | A | A | A | B |

| | | | | | | | | |
|---|---|---|---|---|---|---|---|---|
| * Example not according to the present invention ⁺ Example according to the present invention | | | | | | | | |

### [Table 9]

**Table 9**

| component | | | Example | | | | | | | Comparative Example | | |
|---|---|---|---|---|---|---|---|---|---|---|---|---|
| | | | 86⁺ | 87⁺ | 88⁺ | 89⁺ | 90⁺ | 91⁺ | 92⁺ | 10 | 11 | 12 |
| resin component (A) | A-1 | | | | | | 10 | | 15 | 24.8 | | |
| | A-3 | | | | 15 | | | | | | 15 | |
| | A-5 | | 21.7 | 12.5 | | 7.5 | | 10 | | | | 7.5 |
| | A-6 | | | | | | 5 | 2 | 5 | | | |
| | A-7 | | | 2.5 | | | | 2 | 5 | | | |
| | A-9 | | | | | 5 | | | | | | 5 |
| | A-10 | | | | | 2.5 | | | | | | 2.5 |
| | A-11 | | | | | | | 2 | | | | |
| | A-12 | | | 1 | | | | | | | | |
| | MP25 | | 0.5 | | | | | | 1 | | | |
| | EVA15 | | | 1 | | | | 1 | | | | |
| ester compound (B) | TMPIB | | | | 1 | | 0.5 | | 0.5 | | | |
| | TEHAG | | | 0.5 | | | 0.5 | 0.5 | 0.5 | | | |
| | DINCH | | 1.5 | 2 | 1.5 | 0.5 | 1.5 | 1.5 | 0.5 | | | |
| | E-PS | | | | | 1.5 | | 0.5 | 0.5 | | | |
| antifouling agent (C) | cuprous oxide | | 30 | 30 | 30 | 30 | 30 | 30 | | 45 | 30 | 30 |
| | copper pyrithione | | 1.5 | 1.5 | 1.5 | 1.5 | 1.5 | 1 | 3 | 3 | 1.5 | 1.5 |
| | zinc pyrithione | | | | | | | | 2.5 | | | |
| | SeaNine | | | 0.5 | | | | 0.5 | 1 | | | |
| | Econea | | | | | | | 0.5 | 7 | | | |
| | medetomidine | | | 0.5 | | | | 0.5 | 0.5 | | | |
| thermoplastic resin (D) | rosin zinc salt solution | | 8.8 | 13 | 14 | 14 | 14 | 13 | 5 | 6.2 | 14 | 14 |
| | NT-RMZ | | | | | | | | 12 | | | |
| | Lutonal A-25 | | 1 | | | | | | | | | |
| other additives (F) [pigment] | red oxide | | 2 | 2 | 2 | 2 | 2 | 2 | 2 | 2 | 2 | 2 |
| | talc | | 7 | 7 | 7 | 7 | 7 | 7 | 5 | 2 | 7 | 7 |
| | zinc oxide | | 14 | 14 | 14 | 14 | 14 | 14 | 15 | 4 | 14 | 14 |
| | titanium oxide | | 1 | 1 | 1 | 1 | 1 | 1 | 1 | 1 | 1 | 1 |
| other additives (F) | tetraethoxy silane | | 0.5 | 0.5 | 0.5 | 0.5 | 0.5 | 0.5 | 0.5 | 1 | 0.5 | 0.5 |
| | calcium sulfate anhydrite | | | | | | | | 0.5 | | | |
| | aliphatic amide thixotropic | | 3 | 2 | 2 | 2 | 2 | 2 | 3 | 4 | 2 | 2 |
| solvent | xylene | | 7.5 | 8.5 | 10.5 | 11 | 10.5 | 8.5 | 14 | 7 | 13 | 13 |
| total | | | 100 | 100 | 100 | 100 | 100 | 100 | 100 | 100 | 100 | 100 |
| test example 1 rotary test | evaluation of average dissolving amount of coating film | 3 to 6 months | A | A | A | A | A | A | B | A | A | B |
| | | 6 to 9 months | A | A | A | A | A | A | B | B | B | B |
| | | 9 to 12 months | A | A | A | A | A | A | A | A | C | B |
| | | 12 to 15 months | A | A | A | A | A | A | A | C | C | X |
| | | 15 to 18 months | A | A | A | A | A | A | A | C | C | A |
| | | 18 to 21 months | A | A | A | A | A | A | A | - | - | X |
| | | 21 to 24 months | A | A | A | A | A | A | B | | | X |
| | evaluation of condition of coating film after 24 months | | A | A | A | A | A | A | B | | | C |
| test example 2 antifouling test | after 12 months | | A | A | A | A | A | A | A | B | C | X |
| | after 24 months | | A | B | A | B | A | A | B | X | X | X |

| | | | | | | | | | | | | |
|---|---|---|---|---|---|---|---|---|---|---|---|---|
| ⁺ Example according to the present invention | | | | | | | | | | | | |

### [Table 10]

**Table 10**

| component | | | Example | | | | | | | | | |
|---|---|---|---|---|---|---|---|---|---|---|---|---|
| | | | 93* | 94⁺ | 95* | 96⁺ | 97* | 98⁺ | 99* | 100⁺ | 101⁺ | 102⁺ |
| resin component (A) | A-7 | | 24.8 | 15 | 24.8 | 15 | | | | | 20 | |
| | A-8 | | | | | | 24.8 | 15 | 24.8 | 15 | | 26 |
| | A-10 | | | | | | | | | | 5 | |
| | EVA15 | | | | | | | | | 1 | | |
| | TP-217 | | | | | | | | | | 5 | |
| ester compound (B) | TMPIB | | 0.5 | | | | 0.5 | | | | 0.5 | |
| | TEHAG | | | | | 0.5 | | | | 1 | 0.5 | 0.5 |
| | TEHACA | | 0.5 | 0.5 | 1 | | 1.5 | 1 | 1.5 | | 0.5 | 0.5 |
| | DINCH | | | 1 | | 1 | | 1 | | 1 | 0.5 | 1 |
| antifouling agent (C) | cuprous oxide | | 45 | 30 | 45 | 45 | 45 | 30 | 45 | 45 | | |
| | copper pyrithione | | 3 | 1.5 | 3 | 2 | 3 | 1.5 | 3 | 2 | | |
| | zinc pyrithione | | | | | | | | | | 5 | 2.5 |
| | copper rhodanide | | 0.5 | | | | 0.5 | | | | | |
| | Zineb | | | | 0.5 | | | | 0.5 | | | |
| | SeaNine | | | | | | | | | | 3 | 3 |
| | Econea | | 0.5 | | | | 0.5 | | | | 7 | 7 |
| | medetomidine | | | | 0.5 | | | | 0.5 | | 1 | 0.5 |
| thermoplastic resin (D) | rosin solution | | 3.2 | | | 14 | 3.2 | | | 14 | | |
| | rosin zinc salt solution | | 3 | 14 | | | 3 | 14 | | | 5 | 5 |
| | hydrogenated rosin solution | | | | 3 | | | | 3 | | | |
| | NT-RMZ | | | | 3.2 | | | | 3.2 | | 5 | 13 |
| | Lutonal A-25 | | | | | 1 | | | | | | |
| other additives (F) [pigment] | red oxide | | 2 | 2 | 2 | 2 | 2 | 2 | 2 | 2 | 2 | 2 |
| | talc | | 2 | 7 | 2 | 3 | 2 | 7 | 2 | 3 | 5 | 5 |
| | zinc oxide | | 4 | 14 | 4 | 2 | 4 | 14 | 4 | 2 | 15 | 15 |
| | titanium oxide | | 1 | 1 | 1 | 1 | 1 | 1 | 1 | 1 | 1 | 1 |
| other additives (F) | tetraethoxy silane | | 1 | 0.5 | 1 | 0.5 | 1 | 0.5 | 1 | 0.5 | 0.5 | 0.5 |
| | calcium sulfate anhydrite | | | | | | | | | 0.5 | 0.5 | 0.5 |
| | aliphatic amide thixotropic | | 4 | 2 | 4 | 3 | 4 | 2 | 4 | 3 | 3 | 3 |
| solvent | xylene | | 5 | 11.5 | 5 | 10 | 4 | 11 | 4.5 | 9 | 15 | 14 |
| total | | | 100 | 100 | 100 | 100 | 100 | 100 | 100 | 100 | 100 | 100 |
| test example 1 rotary test | evaluation of average dissolving amount of coating film | 3 to 6 months | A | A | A | A | A | A | A | A | B | B |
| | | 6 to 9 months | A | A | A | A | A | A | A | A | A | A |
| | | 9 to 12 months | A | A | A | A | A | A | A | A | B | A |
| | | 12 to 15 months | A | A | A | A | A | A | A | A | A | A |
| | evaluation of condition of coating film after 15 months | | A | A | A | A | A | A | A | A | B | B |
| test example 2 antifouling test | after 9 months | | A | A | A | A | A | A | A | A | B | A |
| | after 15 months | | A | A | A | A | A | A | A | A | B | B |

| | | | | | | | | | | | | |
|---|---|---|---|---|---|---|---|---|---|---|---|---|
| * Example not according to the present invention ⁺ Example according to the present invention | | | | | | | | | | | | |

### [Table 11]

**Table 11**

| component | | | Example | | | | Comparative Example | | |
|---|---|---|---|---|---|---|---|---|---|
| | | | 103* | 104⁺ | 105* | 106⁺ | 13 | 14 | 15 |
| resin component (A) | A-7 | | | | | | 15 | | |
| | A-8 | | | | | | | 15 | |
| | A-9 | | 24.3 | 15 | 23.8 | 15 | | | 15 |
| | A-12 | | | | | 0.5 | | | |
| | A-13 | | 0.5 | | 0.5 | 1 | | | |
| | MP25 | | | 0.5 | | | | | |
| | TP-217 | | | | 0.5 | | | | |
| ester compound (B) | TMPIB | | 0.5 | | | | | | |
| | TEHAG | | | | | 0.5 | | | |
| | TEHACA | | 0.5 | 1.5 | 1 | | | | |
| | DINCH | | | 1 | | 1 | | | |
| antifouling agent (C) | cuprous oxide | | 45 | 30 | 45 | 45 | 30 | 30 | 30 |
| | copper pyrithione | | 3 | 1.5 | 3 | 2 | 1.5 | 1.5 | 1.5 |
| | copper rhodanide | | 0.5 | | | | | | |
| | Zineb | | | | 0.5 | | | | |
| | Econea | | 0.5 | | | | | | |
| | medetomidine | | | | 0.5 | | | | |
| thermoplastic resin (D) | rosin solution | | 3.2 | | | 15 | | | |
| | rosin zinc salt solution | | 3 | 13 | | | 14 | 14 | 14 |
| | hydrogenated rosin solution | | | | 3 | | | | |
| | NT-RMZ | | | | 3.2 | | | | |
| other additives (F) [pigment] | red oxide | | 2 | 2 | 2 | 2 | 2 | 2 | 2 |
| | talc | | 2 | 7 | 2 | 3 | 7 | 7 | 7 |
| | zinc oxide | | 4 | 14 | 4 | 2 | 14 | 14 | 14 |
| | titanium oxide | | 1 | 1 | 1 | 1 | 1 | 1 | 1 |
| other additives (F) | tetraethoxy silane | | 1 | 0.5 | 1 | 0.5 | 0.5 | 0.5 | 0.5 |
| | aliphatic amide thixotropic | | 4 | 2 | 4 | 3 | 2 | 2 | 2 |
| solvent | xylene | | 5 | 11 | 5 | 8.5 | 13 | 13 | 13 |
| total | | | 100 | 100 | 100 | 100 | 100 | 100 | 100 |
| test example 1 rotary test | evaluation of average dissolving amount of coating film | 3 to 6 months | A | A | A | A | C | A | B |
| | | 6 to 9 months | A | A | A | A | B | A | B |
| | | 9 to 12 months | A | A | A | A | A | A | X |
| | | 12 to 15 months | A | A | A | A | X | X | X |
| | evaluation of condition of coating film after 15 months | | A | A | A | A | X | C | X |
| test example 2 antifouling test | after 9 months | | A | A | A | A | B | C | C |
| | after 15 months | | A | A | A | A | X | X | X |

| | | | | | | | | | |
|---|---|---|---|---|---|---|---|---|---|
| * Example not according to the present invention ⁺ Example according to the present invention | | | | | | | | | |

Details of each of the components mentioned in Table 2 to Table 11 are as follows.

### (resin component (A))

MP 25: product name "Laroflex (registered tradename) MP 25" (available from BASF Dispersions & Resins)
EVA 15: product name "Novatec ^{™} EVA LV440" (available from Japan Polyethylene Corporation)
TP-217: product name "Polyester TP-217 S40CI" (available from The Nippon Synthetic Chemical Industry Co., Ltd.)

### (ester compound (B))

### [ester compound (1)]

HDOA: 1,6-hexanediol diacetate: product name "1,6-Diacetoxyhexane" (available from TOKYO CHEMICAL INDUSTRY CO., LTD.)
TMPIB: 2,2,4-trimethyl-1,3-pentanediol diisobutyrate: product name "2,2,4-Trimethyl-1,3-pentanediol Diisobutyrate" (available from TOKYO CHEMICAL INDUSTRY CO., LTD.)
CHMEH: 1,4-cyclohexane dimethanol bis(2-ethylhexanoate)

### [ester compound (2)]

TAAG: glycerol triacetate: product name "Triacetin" (available from TOKYO CHEMICAL INDUSTRY CO., LTD.)
TBAG: glycerol tributyrate: product name "Tributyrin" (available from Wako Pure Chemical Industries, Ltd.)
TEHAG: glycerol tris(2-ethylhexanoate): product name "tris(2-ethylhexanoate) glycerol" (available from Wako Pure Chemical Industries, Ltd.)

### [ester compound (3)]

LAHD: hexadecyl lactate: product name "Hexadecyl Lactate" (available from TOKYO CHEMICAL INDUSTRY CO., LTD.)
MISAG: glycerol monoisostearate: product name "Glycerol Monoisostearate" (available from Wako Pure Chemical Industries, Ltd.)
ARAM: methyl acetylricinoleate: product name "Methyl O-Acetylricinoleate" (available from TOKYO CHEMICAL INDUSTRY CO., LTD.)
MPhGAE: ethyl 3-methyl-3-phenylglycidate: product name "Ethyl 3-Methyl-3-phenylglycidate" (available from TOKYO CHEMICAL INDUSTRY CO., LTD.)
TPA: terpinyl acetate: product name "Terpinyl Acetate" (available from TOKYO CHEMICAL INDUSTRY CO., LTD.)
t-BCHA: 4-tert-butylcyclohexylacetate: product name "p-t-Butylcyclohexyl Acetate" (available from Wako Pure Chemical Industries, Ltd.)
MENTA: menthyl acetate: product name "(-)-Menthyl Acetate" (available from TOKYO CHEMICAL INDUSTRY CO., LTD.)
i-BoAc: isobornyl acetate: produce name "Isobornyl Acetate" (available from TOKYO CHEMICAL INDUSTRY CO., LTD.)
DHJAM: methyl dihydrojasmonate: product name "Methyl Dihydrojasmonate" (available from TOKYO CHEMICAL INDUSTRY CO., LTD.)
ECHECH: 3,4-epoxycyclohexylmethyl 3',4'-epoxycyclohexanecarboxylate: product name "3,4-Epoxycyclohexylmethyl 3',4'-Epoxycyclohexanecarboxylate" (available from Wako Pure Chemical Industries, Ltd.)
PATHF: tetrahydrofurfuryl propionate: product name "Tetrahydrofurfuryl Propionate" (available from TOKYO CHEMICAL INDUSTRY CO., LTD.)
DMOA: 3,7-dimethyl-6-octen-1-yl acetate: product name "3,7-Dimethyl-6-octen-1-yl Acetate" (available from Wako Pure Chemical Industries, Ltd.)
n-OFA: n-octyl 2-furancarboxylate: product name "n-Octyl 2-Furancarboxylate" (available from TOKYO CHEMICAL INDUSTRY CO., LTD.)

### [ester compound (4)]

TECA: triethyl citrate: product name "Triethyl Citrate" (available from TOKYO CHEMICAL INDUSTRY CO., LTD.)
TEACA: triethyl acetylcitrate: product name "Triethyl O-Acetylcitrate" (available from TOKYO CHEMICAL INDUSTRY CO., LTD.)
TBACA: tributyl acetylcitrate: product name "Tributyl O-Acetylcitrate" (available from TOKYO CHEMICAL INDUSTRY CO., LTD.)
TEHACA: (2-ethylhexyl) acetylcitrate: product name "CITROFOL (registered tradename) AHII" (available from JUNGBUNZLAUER SUISSE AG)

### [ester compound (5)]

DMCH: dimethyl 1,4-cyclohexanedicarboxylate: product name "Dimethyl 1,4-Cyclohexanedicarboxylate" (available from TOKYO CHEMICAL INDUSTRY CO., LTD.)
1,1-DECH: diethyl 1,1-cyclohexanedicarboxylate: product name "Diethyl 1,1-Cyclohexanedicarboxylate" (available from TOKYO CHEMICAL INDUSTRY CO., LTD.)
1,2-DECH: diethyl 1,2-cyclohexanedicarboxylate: product name "Diethyl 1,2-Cyclohexanedicarboxylate" (available from TOKYO CHEMICAL INDUSTRY CO., LTD.)
DGCH: diglycidyl 1,2-cyclohexanedicarboxylate: product name "Diglycidyl 1,2-Cyclohexanedicarboxylate" (available from TOKYO CHEMICAL INDUSTRY CO., LTD.)
DMCDO: dimethyl 1,4-cyclohexanedione-2,5-dicarboxylate: product name "Dimethyl 1,4-Cyclohexanedione-2,5-dicarboxylate" (available from TOKYO CHEMICAL INDUSTRY CO., LTD.)
DEHTH: di-2-ethylhexyl 4-cyclohexene-1,2-dicarboxylate: product name "SANSO CIZER DEHTH" (available from New Japan Chemical Co., Ltd.)
DINCH: diisononyl 1,2-cyclohexane dicarboxylate: product name "HEXAMOLL (registered tradename) DINCH (registered tradename)" (available from BASF)
E-PS: di-2-ethylhexyl 4,5-epoxycyclohexane-1,2-dicarboxylate: product name "SANSO CIZER E-PS" (available from New Japan Chemical Co., Ltd.)
EP-18: distearyl 4,5-epoxycyclohexane-1,2-dicarboxylate: product name "RIKAFLOW EP-18" (available from New Japan Chemical Co., Ltd.)
E-PO: diepoxystearyl 4,5-epoxycyclohexane-1,2-dicarboxylate: product name "SANSO CIZER E-PO" (available from New Japan Chemical Co., Ltd.)

### (antifouling agent (C))

cuprous oxide : product name "NC-301" (available from NISSIN CHEMCO LTD.)
copper pyrithione : product name "copper Omadine" (available from Arch Chemical, Inc.)
Sea Nine: product name "Sea Nine 211" (4,5-dichloro-2-n-octyl-3-(2H)isothiazoline, 30% solids, xylene solution, available from Rohm & Haas, Inc.)
zinc pyrithione: product name "zinc Omadine" (available from Arch Chemical, Inc.)
Econia: product name "Econea 028" (2-(p-chlorophenyl)3-cyano-4-bromo-5-trifluoromethyl pyrrole, available from JANSSEN PMP)
Medetomidine: product name "4-(1-(2,3-Dimethylphenyl)ethyl)-1H-imidazole" (available from Wako Pure Chemical Industries, Ltd.)
copper rhodanide: product name "cuprous thiocyanate (I)" (available from Sigma-Aldrich, Inc.)
Zineb: product name "Zineb" (available from Sigma-Aldrich, Inc.)

### (thermoplastic resin (D))

rosin zinc salt solution: The one produced in production example 17 was used.
hydrogenated rosin solution: product name "HYPALE CH" (50% solids xylene solution, available from ARAKAWA CHEMICAL INDUSTRIES, LTD.)
rosin solution: xylene solution (50% solids) of Chinese gum rosin (WW)
NT-RMZ: hydrogenated rosin zinc salt solution: product name "NT-RMZ", 65% solids (available from Nitto Kasei Co., Ltd.)
Lutonal A 25: "Lutonal (registered tradename A 25" (Product name, available from BASF)

### (additives (F)) [pigments]

red oxide: product name "TODA COLOR EP-13D" (available from Toda Pigment Corp.)
talc: product name "CROWN TALC 3S" (available from matsumura sangyo Co., Ltd.)
zinc oxide: product name "zinc oxide II" (available from Seido Chemical Industry Co., Ltd.)
titanium oxide: product name "FR-41" (available from FURUKAWA CO., LTD.)

### (additives (F)) [dehydrating agent, anti-sagging agent]

Tetraethoxysilane: product name "Tetraethyl Orthosilicate" (available from TOKYO CHEMICAL INDUSTRY CO., LTD.)
aliphatic amide thixotropic agent: product name "Disparlon A603-20X" (available from Kusumoto Chemicals, Ltd.)
calcium sulfate anhydrite: product name "D-1" (available from NORITAKE CO., LIMITED)

## Claims

1. Use of an antifouling coating composition for forming an antifouling coating film to prevent adhesion of aquatic fouling organisms, comprising:
a resin component (A);
an ester compound (B), wherein the ester compound (B) is contained by 0.1 to 15 mass% in the solids of the composition ; and
an antifouling agent,
**characterized in that**
the ester compound (B) comprises at least one ester compound represented by the following chemical formula (14), chemical formula (15); chemical formula (16) or chemical formula (19): 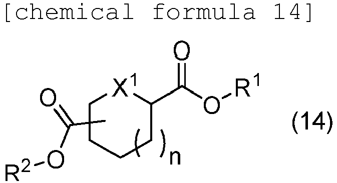 wherein, X¹ is a C0-C6 group which can include a hetero atom, wherein when the number of carbon atoms in X¹ is 0, X¹ is a hetero atom-containing group containing no carbon atom, and represents O, S, NH;
each of R¹ and R² is a C1-C22 hydrocarbon group which can include a hetero atom, and the hydrocarbon group is aliphatic or aromatic, and has a linear, branched, or cyclic structure;
n is an integer of 0 to 5; and
the substituent group having R² is bonded to either one of the atoms structuring the cyclic structure; 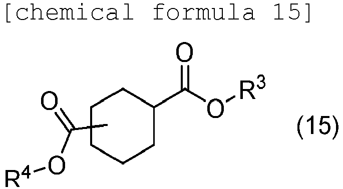 wherein, each of R³ and R⁴ is a C1-C22 hydrocarbon group which can include a hetero atom, and the hydrocarbon group is aliphatic or aromatic, and has a linear, branched, or cyclic structure; and
the substituent group having R⁴ is bonded to either one of the atoms structuring the cyclic structure; 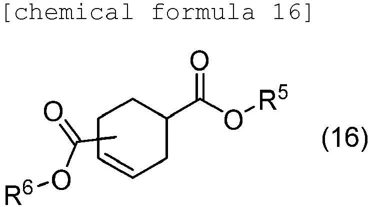 wherein, each of R⁵ and R⁶ is a C1-C22 hydrocarbon group which can include a hetero atom, and the hydrocarbon group is aliphatic or aromatic, and has a linear, branched, or cyclic structure; and
the substituent group having R⁶ is bonded to either one of the atoms structuring the cyclic structure; 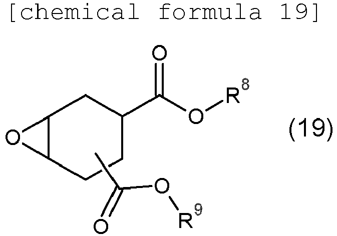 wherein, each of R⁸ and R⁹ is a C1-C22 hydrocarbon group which can include a hetero atom, and the hydrocarbon group is aliphatic or aromatic, and has a linear, branched, or cyclic structure; and
the substituent group having R⁹ is bonded to either one of the atoms structuring the cyclic structure ;
wherein the antifouling coating composition is further **characterized in that**
the resin compound (A) being a polymer obtained from a monomer comprising one or more among monomer (a), monomer (b), monomer (c), and monomer (d):
(a) chemical formula (9): 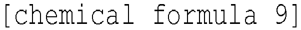 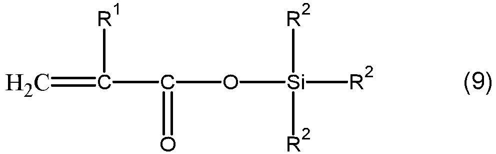 wherein, R¹ represents a hydrogen atom or a methyl group; three R² are the same or different from each other and represent a C3-C8 hydrocarbon group branched at its α-position or at its β-position; and the hydrocarbon group is an aliphatic or an aromatic group, and has a linear, branched, or ring structure;
(b) chemical formula (10): 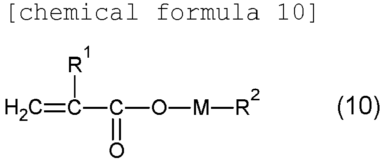 wherein, R¹ represents a group selected from a hydrogen atom and a methyl group, M represents a metal atom of Zn, Cu, or Mg, and R² represents an organic acid residue group;
(c) chemical formula (11): 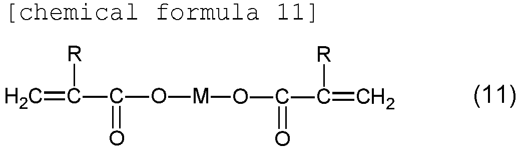 wherein, two R are the same or different from each other and represent a group selected from a hydrogen atom and a methyl group, M represents a metal atom of Zn, Cu, or Mg; and
(d) an ethylenically unsaturated monomer other than monomer (a), monomer (b), and monomer (c).

2. Use of the antifouling coating composition of Claim 1, wherein the resin component (A) is a polymer obtained from a monomer comprising monomer (a).

3. Use of the antifouling coating composition of Claim 1 or 2, wherein the resin component (A) is a polymer obtained from a monomer comprising one or more of monomer (b) and monomer (c).

4. Use of the antifouling coating composition of any one of Claims 1 to 3, wherein the resin component (A) is a polymer obtained from a monomer comprising monomer (d).

5. A coated object having on its surface an antifouling coating film obtained by the use of the antifouling coating composition of any one of Claims 1 to 4.

## Patentansprüche

1. Verwendung einer bewuchshemmenden Beschichtungszusammensetzung zum Ausbilden eines bewuchshemmenden Beschichtungsfilms, um Adhäsion aquatischer Bewuchsorganismen zu verhindern, umfassend:
eine Harzkomponente (A);
eine Esterverbindung (B), wobei die Esterverbindung (B) zu 0,1 bis 15 Masse-% in den Feststoffen der Zusammensetzung enthalten ist; und
ein bewuchshemmendes Mittel,
**dadurch gekennzeichnet, dass**
die Esterverbindung (B) wenigstens eine Esterverbindung umfasst, die durch die folgende chemische Formel (14), chemische Formel (15); chemische Formel (16) oder chemische Formel (19) dargestellt wird: 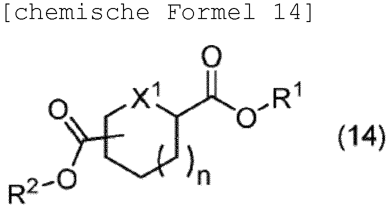 wobei X¹ eine C0-C6-Gruppe ist, die ein Heteroatom enthalten kann, wobei, wenn die Anzahl an Kohlenstoffatomen in X¹ gleich 0 ist, X¹ eine heteroatomhaltige Gruppe ist, die kein Kohlenstoffatom enthält, und O, S, NH darstellt;
jedes von R¹ und R² eine C1-C22-Kohlenwasserstoffgruppe ist, die ein Heteroatom enthalten kann, und die Kohlenwasserstoffgruppe aliphatisch oder aromatisch ist und eine lineare, verzweigte oder cyclische Struktur aufweist;
n eine ganze Zahl von 0 bis 5 ist; und
die Substituentengruppe, welche R² aufweist, an eines der Atome gebunden ist, welche die cyclische Struktur aufbauen; 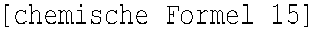 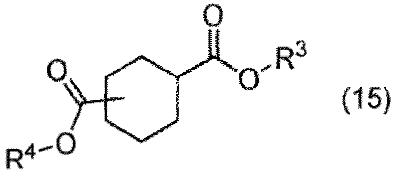 wobei jedes von R³ und R⁴ eine C1-C22-Kohlenwasserstoffgruppe ist, die ein Heteroatom enthalten kann, und die Kohlenwasserstoffgruppe aliphatisch oder aromatisch ist und eine lineare, verzweigte oder cyclische Struktur aufweist; und
die Substituentengruppe, welche R⁴ aufweist, an eines der Atome gebunden ist, welche die cyclische Struktur aufbauen; 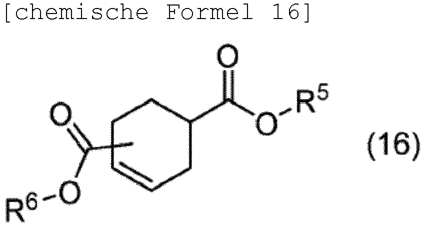 wobei jedes von R⁵ und R⁶ eine C1-C22-Kohlenwasserstoffgruppe ist, die ein Heteroatom enthalten kann, und die Kohlenwasserstoffgruppe aliphatisch oder aromatisch ist und eine lineare, verzweigte oder cyclische Struktur aufweist; und
die Substituentengruppe, welche R⁶ aufweist, an eines der Atome gebunden ist, welche die cyclische Struktur aufbauen; 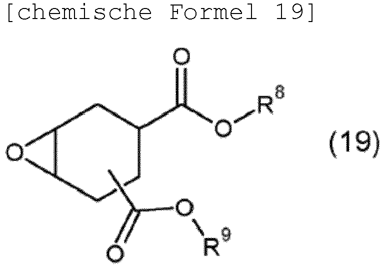 wobei jedes von R⁸ und R⁹ eine C1-C22-Kohlenwasserstoffgruppe ist, die ein Heteroatom enthalten kann, und die Kohlenwasserstoffgruppe aliphatisch oder aromatisch ist und eine lineare, verzweigte oder cyclische Struktur aufweist; und
die Substituentengruppe, die R⁹ aufweist, an eines der Atome gebunden ist, welche die cyclische Struktur aufbauen;
wobei die bewuchshemmende Beschichtungszusammensetzung ferner **dadurch gekennzeichnet ist, dass**
die Harzverbindung (A) ein Polymer ist, das aus einem Monomer, das eines oder mehrere aus Monomer (a), Monomer (b), Monomer (c) und Monomer (d) umfasst, erhalten wurde:
(a) chemische Formel (9): 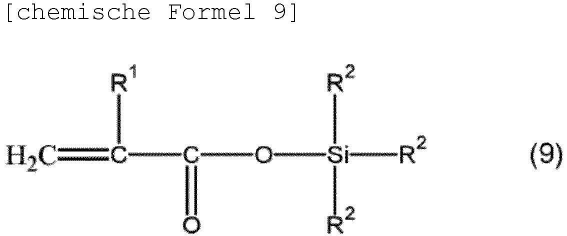 wobei R¹ ein Wasserstoffatom oder eine Methylgruppe darstellt; die drei R² gleich oder voneinander verschieden sind und eine C3-C8-Kohlenwasserstoffgruppe, die an ihrer α-Position oder an ihrer β-Position verzweigt ist, darstellen; und die Kohlenwasserstoffgruppe eine aliphatische oder eine aromatische Gruppe ist und eine lineare, verzweigte oder Ringstruktur aufweist;
(b) chemische Formel (10): 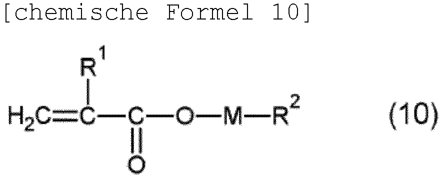 wobei R¹ eine Gruppe darstellt, ausgewählt aus einem Wasserstoffatom und einer Methylgruppe, M ein Metallatom aus Zn, Cu oder Mg darstellt und R² eine organische Säurerestgruppe darstellt;
(c) chemische Formel (11): 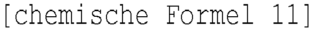 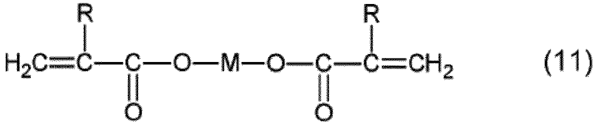 wobei die zwei R gleich oder voneinander verschieden sind und eine Gruppe darstellen, ausgewählt aus einem Wasserstoffatom und einer Methylgruppe, M ein Metallatom aus Zn, Cu oder Mg darstellt; und
(d) ein ethylenisch ungesättigtes Monomer, bei dem es sich nicht um Monomer (a), Monomer (b) und Monomer (c) handelt.

2. Verwendung der bewuchshemmenden Beschichtungszusammensetzung nach Anspruch 1, wobei die Harzkomponente (A) ein Polymer ist, das aus einem Monomer, welches Monomer (a) umfasst, erhalten wurde.

3. Verwendung der bewuchshemmenden Beschichtungszusammensetzung nach Anspruch 1 oder 2, wobei die Harzkomponente (A) ein Polymer ist, das aus einem Monomer, das eines oder mehrere von Monomer (b) und Monomer (c) umfasst, erhalten wurde.

4. Verwendung der bewuchshemmenden Beschichtungszusammensetzung nach einem der Ansprüche 1 bis 3, wobei die Harzkomponente (A) ein Polymer ist, das aus einem Monomer, welches Monomer (d) umfasst, erhalten wurde.

5. Beschichtetes Objekt mit einem bewuchshemmenden Beschichtungsfilm auf seiner Oberfläche, der durch die Verwendung der bewuchshemmenden Beschichtungszusammensetzung nach einem der Ansprüche 1 bis 4 erhalten wurde.

## Revendications

1. Utilisation d'une composition de revêtement antisalissure servant à former un film de revêtement antisalissure pour empêcher l'adhésion d'organismes aquatiques salissants, comprenant :
un composant résinique (A) ;
un composé ester (B), où le composé ester (B) est contenu à 0,1 à 15 % en masse dans les solides de la composition ; et
un agent antisalissure,
**caractérisée en ce que**
le composé ester (B) comprend au moins un composé ester représenté par la formule chimique (14), la formule chimique (15), la formule chimique (16) ou la formule chimique (19) suivantes : 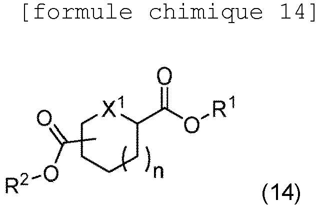 où X¹ représente un groupement en C0-C6 qui peut inclure un hétéroatome et où, quand le nombre d'atomes de carbone de X¹ est 0, X¹ est un groupement contenant un hétéroatome qui ne contient aucun atome de carbone et représente un O, S, NH ;
chacun des radicaux R¹ et R² représente un groupement hydrocarboné en C1-C22 qui peut inclure un hétéroatome, le groupement hydrocarboné étant aliphatique ou aromatique et ayant une structure linéaire, ramifiée ou cyclique ;
n est un nombre entier qui va de 0 à 5 ; et
le groupement substituant qui comporte R² est lié à l'un quelconque des atomes structurant la structure cyclique ; 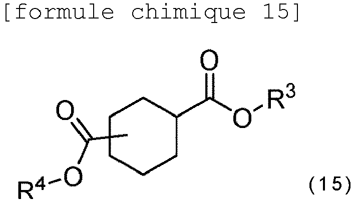 où chacun des radicaux R³ et R⁴ représente un groupement hydrocarboné en C1-C22 qui peut inclure un hétéroatome, le groupement hydrocarboné étant aliphatique ou aromatique et ayant une structure linéaire, ramifiée ou cyclique ; et
le groupement substituant qui comporte R⁴ est lié à l'un quelconque des atomes structurant la structure cyclique ; 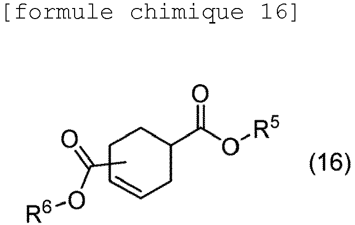 où chacun des radicaux R⁵ et R⁶ représente un groupement hydrocarboné en Cl-C22 qui peut inclure un hétéroatome, le groupement hydrocarboné étant aliphatique ou aromatique et ayant une structure linéaire, ramifiée ou cyclique ; et
le groupement substituant qui comporte R⁶ est lié à l'un quelconque des atomes structurant la structure cyclique ; 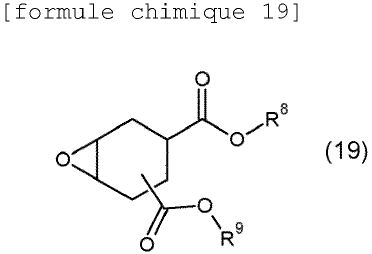 où chacun des radicaux R⁸ et R⁹ représente un groupement hydrocarboné en Cl-C22 qui peut inclure un hétéroatome, le groupement hydrocarboné étant aliphatique ou aromatique et ayant une structure linéaire, ramifiée ou cyclique ; et
le groupement substituant qui comporte R⁹ est lié à l'un quelconque des atomes structurant la structure cyclique ;
où la composition de revêtement antisalissure est en outre **caractérisée en ce que**
le composé résinique (A) est un polymère obtenu à partir d'un monomère comprenant un ou plusieurs parmi un monomère (a), un monomère (b), un monomère (c) et un monomère (d) :
(a) formule chimique (9) : 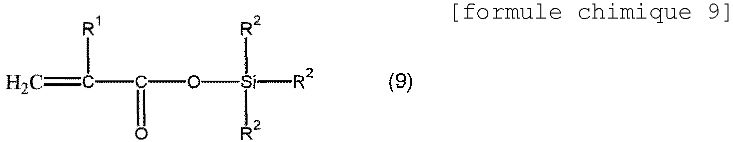 où R¹ représente un atome d'hydrogène ou un groupement méthyle ; les trois radicaux R² sont identiques ou différents les uns des autres et représentent un groupement hydrocarboné en C3-C8 ramifié à sa position α ou à sa position β ; le groupement hydrocarboné étant un groupement aliphatique ou aromatique et ayant une structure linéaire, ramifiée ou cyclique ;
(b) formule chimique (10) : 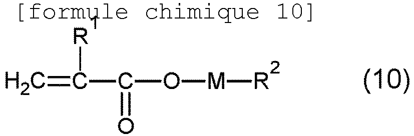 où R¹ représente un groupement sélectionné parmi un atome d'hydrogène et un groupement méthyle, M représente un atome d'un métal qui est le Zn, Cu ou Mg et R² représente un groupement à résidu acide organique ;
(c) formule chimique (11) : 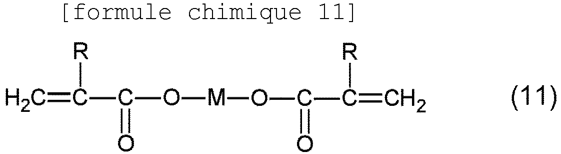 où les deux radicaux R sont identiques ou différents l'un de l'autre et représentent un groupement sélectionné parmi un atome d'hydrogène et un groupement méthyle, M représente un atome d'un métal qui est le Zn, Cu ou Mg ; et
(d) un monomère à insaturation éthylénique autre que le monomère (a), le monomère (b) et le monomère (c).

2. Utilisation de la composition de revêtement antisalissure de la revendication 1, où le composant résinique (A) est un polymère obtenu à partir d'un monomère comprenant le monomère (a).

3. Utilisation de la composition de revêtement antisalissure de la revendication 1 ou 2, où le composant résinique (A) est un polymère obtenu à partir d'un monomère comprenant un ou plusieurs parmi le monomère (b) et le monomère (c).

4. Utilisation de la composition de revêtement antisalissure de l'une quelconque des revendications 1 à 3, où le composant résinique (A) est un polymère obtenu à partir d'un monomère comprenant le monomère (d).

5. Objet revêtu ayant, sur sa surface, un film de revêtement antisalissure obtenu en utilisant la composition de revêtement antisalissure de l'une quelconque des revendications 1 à 4.
